(19) Europäisches Patentamt / European Patent Office / Office européen des brevets

(11) **EP 3 748 966 B1**

(12) **EUROPEAN PATENT SPECIFICATION**

(45) Date of publication and mention
of the grant of the patent:
**21.02.2024 Bulletin 2024/08**

(21) Application number: **18903744.3**

(22) Date of filing: **26.10.2018**

(51) International Patent Classification (IPC):
*H04N 19/103* (2014.01)    *H04N 19/107* (2014.01)
*H04N 19/157* (2014.01)    *H04N 19/176* (2014.01)

(52) Cooperative Patent Classification (CPC):
**H04N 19/157; H04N 19/107; H04N 19/176**

(86) International application number:
**PCT/CN2018/112097**

(87) International publication number:
**WO 2019/148906 (08.08.2019 Gazette 2019/32)**

(54) **VIDEO CODING METHOD, COMPUTER DEVICE, AND STORAGE MEDIUM**

VIDEOCODIERUNGSVERFAHREN, COMPUTERVORRICHTUNG UND SPEICHERMEDIUM

PROCÉDÉ DE CODAGE DE VIDÉO, DISPOSITIF INFORMATIQUE ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.02.2018 CN 201810102997**

(43) Date of publication of application:
**09.12.2020 Bulletin 2020/50**

(73) Proprietor: **Tencent Technology (Shenzhen)
Company Limited
Shenzhen, Guangdong, 518057 (CN)**

(72) Inventor: **MAO, Xunan
Shenzhen, Guangdong 518057 (CN)**

(74) Representative: **Nederlandsch Octrooibureau
P.O. Box 29720
2502 LS The Hague (NL)**

(56) References cited:
WO-A1-2014/161302     CN-A- 101 572 817
CN-A- 104 104 947     CN-A- 104 104 947
CN-A- 104 853 191     KR-B1- 101 516 347

• OZCAN ERDEM ET AL: "A computation and
energy reduction technique for HEVC intra mode
decision", IEEE TRANSACTIONS ON
CONSUMER ELECTRONICS, IEEE SERVICE
CENTER, NEW YORK, NY, US, vol. 60, no. 4, 1
November 2014 (2014-11-01), pages 745-753,
XP011572368, ISSN: 0098-3063, DOI:
10.1109/TCE.2014.7027351 [retrieved on
2015-01-29]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

RELATED APPLICATION

This application claims priority to Chinese Patent Application No. 201810102997X, entitled "VIDEO CODING METHOD, APPARATUS, COMPUTER-READABLE STORAGE MEDIUM, AND COMPUTER DEVICE" filed with the China National Intellectual Property Administration on February 1, 2018.

FIELD OF THE TECHNOLOGY

This application relates to computer technologies, and in particular, to a video encoding method, a computer device, and a storage medium.

BACKGROUND OF THE DISCLOSURE

With the development of computer technologies, video coding technologies appear. High Efficient Video Coding (HEVC) is a new-generation high efficient video coding standard jointly developed by the International Telecommunication Union-Telecommunication Standardization Sector (ITU-T) and the International Organization for Standardization (ISO). Compared with previous H. 264/Advanced video Coding (AVC) standards, the HEVC adopts more novel and flexible coding technologies. Under the same video quality, the HEVC has further reduced code rates with the cost of much higher computational complexity, which greatly increases the difficulty for real-time communication.

Currently, during HEVC coding, the selection of coding modes of coding units are carried out mainly in the following manner: for each coding unit under the intra-prediction coding mode, an intra-prediction mode is selected; and for each coding units under the inter-prediction coding mode, an inter-prediction mode is selected first, and it is determined whether an intra-prediction mode is to be selected according to a transform quantization coefficient of the selected optimal inter-prediction mode. The foregoing coding method cannot flexibly select intra-prediction modes, has high computational complexity, and has low video encoding efficiency.

Document WO 2014/161302 A1 (TENCENT TECH SHENZHEN CO LTD [CN]) 9 October 2014 (2014-10-09), and document CN 104 104 947 A (TENCENT TECH SHENZHEN CO LTD) 15 October 2014 (2014-10-15), disclose that a similarity between pair-wise sub-blocks of a coding unit (CU) is respectively calculated. The intra/inter prediction-mode selection is performed based on the determined similarity of the sub-blocks.

SUMMARY

According to various embodiments of this application, a video encoding method and apparatus, a computer-readable storage medium, and a computer device are provided.

In accordance with the invention, a video encoding method is provided as set out in claim 1, a computer device, comprising a memory and a processor, the memory storing computer readable instructions, is provided as set out in claim 11, a computer device is provided as set out in claim 12, and a storage medium is provided as set out in claim 13.

Details of one or multiple embodiments of this application are provided in the following accompanying drawings and descriptions. Other features, objectives, and advantages of this application become apparent from the specification, the accompanying drawings, and the claims.

BRIEF DESCRIPTION OF THE DRAWINGS

To describe the technical solutions of embodiments of this application more clearly, the following briefly introduces the accompanying drawings used in describing the embodiments. Apparently, the accompanying drawings in the following description are only some embodiments of this application, and a person of ordinary skill in the art can derive other drawings from these accompanying drawings without creative efforts.

FIG. 1 is a schematic diagram of an application scenario of a video encoding method in an embodiment.

FIG. 2 is a schematic diagram of the framework of a video encoding method in an embodiment.

FIG. 3 is a schematic flowchart of a video encoding method in an embodiment.

FIG. 4 is a schematic diagram of a preset dividing processing of a current coding unit in an embodiment.

FIG. 5 is a schematic flowchart of the procedure of determining a skip state according to degrees of difference between adjacent subunits in an embodiment.

FIG. 6 is a schematic flowchart of the procedure of calculating degrees of difference between adjacent subunits in an embodiment.

FIG. 7 is a schematic flowchart of a video encoding method in another embodiment.

FIG. 8 is a schematic flowchart of an encoding method under an intra-prediction mode in an embodiment.

FIG. 9 is a schematic flowchart of a video encoding method in still another embodiment.

FIG. 10 is a schematic diagram of a coding dividing processing in an embodiment.

FIG. 11 is a schematic flowchart of a video encoding method in a specific embodiment.

FIG. 12 is a schematic flowchart of the procedure of calculating degrees of difference between adjacent subunits in a specific embodiment.

FIG. 13 is a block diagram of the structure of a video encoding apparatus in an embodiment.

FIG. 14 is a block diagram of the structure of a skip state determining module in an embodiment.

FIG. 15 is a block diagram of the structure of a subunit difference degree calculating unit in an embodiment.

FIG. 16 is a block diagram of the structure of a video encoding apparatus in another embodiment.

FIG. 17 is a block diagram of the structure of an encoding module in another embodiment.

FIG. 18 is a block diagram of the structure of a video encoding apparatus in an embodiment.

FIG. 19 is a block diagram of the structure of a computer device in an embodiment.

## DESCRIPTION OF EMBODIMENTS

To make the objectives, technical solutions, and advantages of this application clearer and more readily understood, this application is further described in detail below with reference to the accompanying drawings and the embodiments. It is to be understood that the specific embodiments described herein are only used for explaining this application, and are not used for limiting this application.

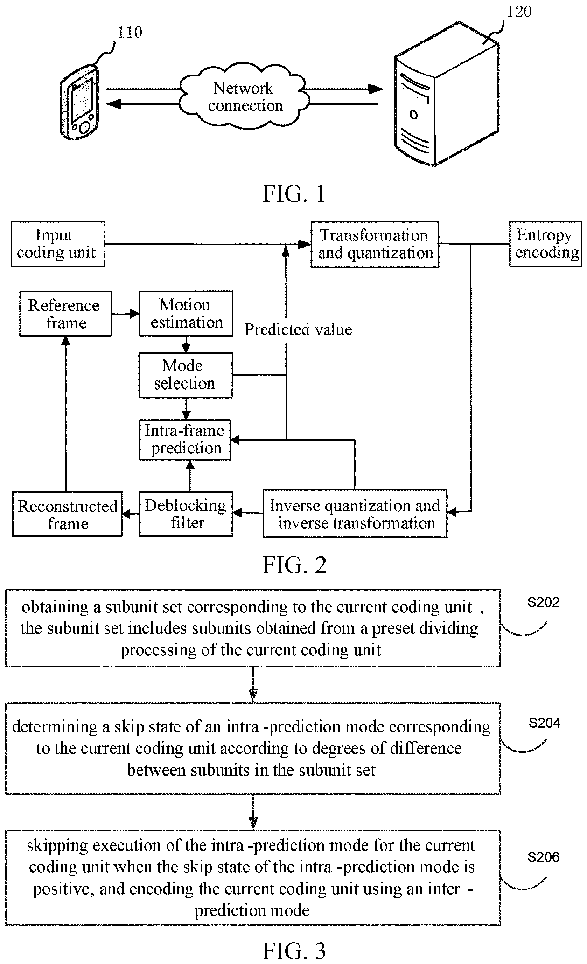

FIG. 1 is a schematic diagram of an application scenario of a video encoding method in an embodiment. The application scenario may include a terminal 110 and a server 120. The terminal 110 may encode a video image. The encoding may include: obtaining a subunit set corresponding to a current coding unit, the subunit set may include subunits obtained by applying a preset dividing processing to the current coding unit; determining a skip state of an intra-prediction mode corresponding to the current coding unit according to degrees of difference between subunits in the subunit set; and skipping execution of the intra-prediction mode for the current coding unit and encoding the current coding unit using an inter-prediction mode in response to a determination that the skip state of the intra-prediction mode is positive. The terminal 110 may transmit the encoded video to the server 120 through a network. Alternatively, the terminal 110 may transmit the obtained video image to the server 120 which may encode the video image according to the foregoing method.

The server 120 may be a standalone physical server, or may be a server cluster including a plurality of physical servers, or may be a cloud server providing basic cloud computing services, such as a cloud server, a cloud database, cloud storage and a content delivery network (CDN). The terminal 110 may be, but not limited to, a smartphone, a tablet computer, a laptop computer, a desktop computer, a professional camera, or the like. The server 120 and the terminal 110 may be connected in a communication connection manner such as a network, which is not limited in the present disclosure.

FIG. 2 is a schematic diagram of the framework of a video encoding method in an embodiment. Referring to FIG. 2, during video encoding, a video image may be divided into a plurality of coding units. A coding control module may select a coding prediction mode for a coding unit according to local features of different coding units in the video frame. The prediction mode may include an intra-prediction coding mode or an inter-prediction coding mode. A coding unit which adopts intra-prediction coding may be processed through spatial prediction. The spatial prediction refers to a coding algorithm which performs prediction in a spatial domain to remove spatial redundancy between adjacent blocks. A coding unit which adopts inter-prediction coding may be processed through motion estimation and then motion compensation prediction to obtain a predicted value. The predicted value may be subtracted from an actual value of the coding unit to obtain a prediction residual. Then, a residual coefficient may be generated through transformation and quantization processings. Finally, a final code stream may be generated using an entropy encoder. During inter-prediction, motion estimation may be performed with reference to other coding units that have been through prediction coding, thus may be performed on the encoded coding units after inverse quantization and inverse transformation, de-blocking filtering and frame reference. Since there are various prediction modes of the coding units and the computing process is complex, the encoding efficiency may be reduced if calculations are performed for each prediction mode. Therefore, some features of the coding units may be taken advantage of so that the intra-prediction coding of some coding units may be skipped to reduce the calculation amount and improve the encoding efficiency.

As shown in FIG. 3, an embodiment provides a video encoding method. Applying the video encoding method to the terminal or the server as shown in FIG. 1 is taken as an example, and the video encoding method may include the following steps.

At step S202, a subunit set corresponding to a current coding unit may be obtained, the subunit set may include subunits obtained by applying a preset dividing processing to the current coding unit.

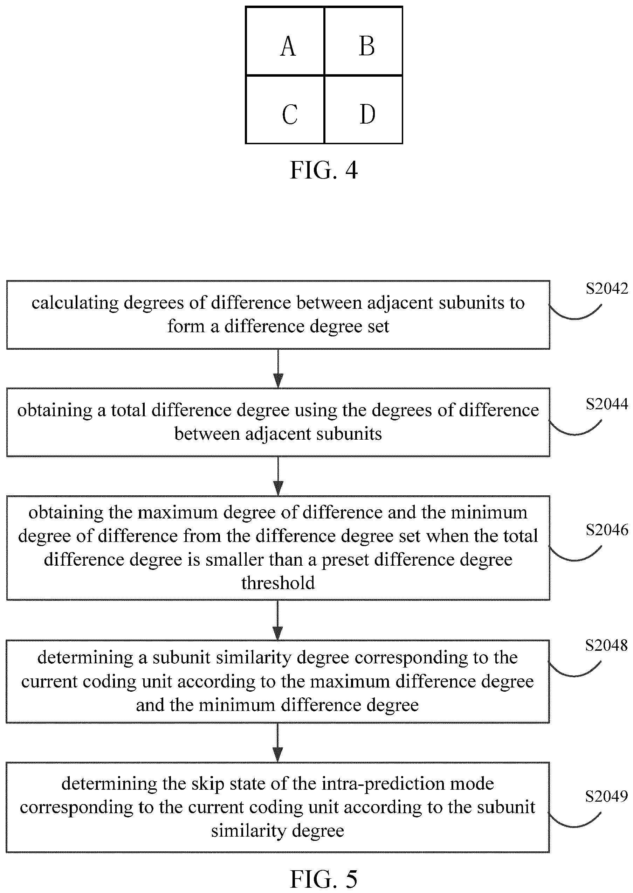

In an embodiment, the current coding unit (CU) is one of a plurality of coding blocks obtained by applying coding division to an image. For example, a tree-shaped CU structure is adopted in HEVC. Four types of coding units, i.e., 64×64, 32×32, 16×16 and 8×8, may be flexibly selected from. The preset dividing processing is not equivalent to the coding division processing. The coding division processing is a dividing process conforming to a coding standard, while the preset dividing processing is not limited by the coding standard and is only for dividing an image into a plurality of areas which may or may not overlap with each other. The current coding unit may be divided into a plurality of subunits according to a preset rule. The subunits may or may not overlap with each other. Sizes of the subunits may or may not be the same. For example, in the HEVC, the current coding unit may be divided into four subunits of the same size, and a set formed by the four subunits is referred to as a subunit set. As shown in FIG. 4, the current coding unit has a size of 64×64 pixels. The current coding unit may be divided into a subunit set including four non-overlapping 32×32 subunits or four partially overlapping 32×32 subunits.

At step S204, a skip state of an intra-prediction mode corresponding to the current coding unit may be determined according to degrees of difference between subunits in the subunit set.

The degrees of difference may be determined according to image contents of subunits. Higher degrees of difference between subunits indicate the subunits are less similar while lower degrees of difference between subunits indicate the subunits are more similar. The skip state of the intra-prediction mode corresponding to the current coding unit indicates whether the current coding unit skips the intra-prediction mode, and includes a positive state and a negative state. When the skip state is positive, it indicates the current coding unit may select an inter-prediction mode while skipping the intra-prediction mode during encoding. When the skip state is negative, it indicates the current coding unit is processed under an intra-prediction mode during encoding. Whether the current coding unit skips the intra-prediction mode may be determined according to the degrees of difference between the subunits corresponding to the current coding unit.

In an embodiment, in response to a determination that the skip state of the intra-prediction mode corresponding to the current coding unit is negative according to the degrees of difference between subunits in the subunit set, the prediction mode of the current coding unit may be determined according to other conditions.

In an embodiment, the difference degrees may be determined according to pixel difference between the subunits. Pixels of the image describe the image content. The skip state of the intra-prediction mode corresponding to the current coding unit may be determined according to the differences between pixels, which is equivalent to determining the skip state of the intra-prediction mode corresponding to the current coding unit according to the differences between contents of the image itself. The difference between the content of the image itself can be used to more accurately determine the similarity between the subunits, so that the skip state determined according to the similarity degree is more accurate.

In another embodiment, the degrees of difference may be obtained by transforming the pixel difference between the subunits. The algorithm of the transforming may be defined to be, for example, Fourier transform, or a transform followed by quantization, or the like. For example, the pixel differences between the subunits may be transformed or quantized to obtain the degrees of difference. Information of different domains may be obtained by transforming the pixel differences, for example, transforming from a time domain to a frequency domain. The multi-dimensional information can reflect the similarity between the subunits more accurately.

At step S206, execution of the intra-prediction mode may be skipped for the current coding unit in response to a determination that the skip state of the intra-prediction mode is positive, and the current coding unit may be encoded using an inter-prediction mode.

In an embodiment, when the skip state of the intra-prediction mode of the current coding unit is positive according to the degrees of difference between the subunits, it indicates that the inter-prediction mode is more suitable for the current coding unit. The intra-prediction mode may be skipped for the current coding unit during encoding, and the step of calculating an inter-prediction coding cost for the inter-prediction mode may be directly performed to determine a target coding mode according to the inter-frame coding cost and encode the current coding unit using the target coding mode.

In an embodiment, in response to a determination that the current coding unit is eligible for coding division further, the current coding unit may be divided into coding subunits. The coding subunits obtained from the dividing processing form a coding subunit set, and each coding subunit in the coding subunit set may serve as the current coding unit and be encoded using the foregoing encoding method.

In the foregoing video encoding method, a subunit set corresponding to the current coding unit is obtained, the subunit set including subunits obtained from preset dividing processing of the current coding unit; a skip state of an intra-prediction mode corresponding to the current coding unit may be determined according to degrees of difference between subunits in the subunit set; and execution of the intra-prediction mode is skipped for the current coding unit in response to a determination that the skip state of the intra-prediction mode is positive, and the current coding unit is encoded using an inter-prediction mode. The skip state of the intra-prediction mode corresponding to the current coding unit may be determined by calculating the degrees of difference between the subunits corresponding to the current coding unit to reduce the operations of selecting the intra-prediction mode in the encoding process, thereby the video encoding complexity can be reduced, and the video encoding efficiency can be improved. The skip state of the intra-prediction mode corresponding to the current coding unit may be determined according to the degrees of difference between the subunits. The degrees of difference between the subunits reflect the degree of difference between image contents. Determining the intra-prediction mode corresponding to the current coding unit according to the degree of difference between the image contents can reduce the encoding loss and ensure encoding quality.

As shown in FIG. 5, in an embodiment, the procedure in step S204 may include the following steps.

At step S2042, degrees of difference between adjacent subunits may be calculated to form a difference degree set.

In an embodiment, the degrees of difference between adjacent subunits indicate the extent to which the adjacent subunits are different from or similar with each other. Higher degrees of difference between adjacent subunits indicate that the adjacent subunits are less similar, while lower degrees of difference indicate that the adjacent subunits are more similar. The degrees of difference between adjacent subunits in the subunit set may be calculated, which may form a difference degree set.

In an embodiment, the degrees of difference between adjacent subunits may be measured by, including but not limited to, the sum of absolute errors, the sum of differences of Hadamard transform, the sum of transformed absolute errors, or the mean absolute difference parameter.

At step S2044, a total difference degree may be obtained using the degrees of difference between adjacent subunits.

In an embodiment, statistics of the degrees of difference may be calculated, for example, by calculating the sum of the degrees of difference, to obtain the total difference degree. The total difference degree may be used for determining the total similarity of four subunits. A higher total difference degree indicates that the subunits are less similar, while a lower total difference degree indicates that the subunits are more similar.

At step S2046, the maximum difference degree and the minimum difference degree may be obtained from the difference degree set in response to a determination that the total difference degree is lower than a preset difference degree threshold.

In an embodiment, the preset difference degree threshold is a critical value for determining whether images are similar. When the total difference degree is lower than the preset difference degree threshold, it indicates the subunits are relatively similar, and the maximum difference degree and the minimum difference degree may be selected from the difference degree set of the subunits. The maximum difference degree indicates two adjacent subunits are the least similar. The minimum difference degree indicates two adjacent subunits are the most similar.

In an embodiment, the preset difference degree threshold may be configured according to experience.

In another embodiment, the preset difference degree threshold may be determined according to a mode of an encoded coding unit and/or a difference degree of the encoded coding unit and/or the difference degree threshold.

In still another embodiment, the preset difference degree threshold may be a value in positive correlation with the size of the current coding unit.

At step S2048, a subunit similarity degree corresponding to the current coding unit may be determined according to the maximum difference degree and the minimum difference degree.

In an embodiment, the maximum difference degree represents the degree of difference between two subunits having the largest difference in the subunit set. The minimum difference degree represents the degree of difference between two subunits having the smallest difference in the subunit set. The subunit similarity degree corresponding to the current coding unit may be determined by a difference between the maximum difference degree and the minimum difference degree. The difference between the maximum difference degree and the minimum difference degree may be determined by a user-defined algorithm. For example, the difference may be determined according to the ratio and/or the difference between the maximum difference degree and the minimum difference degree.

At step S2049, the skip state of the intra-prediction mode corresponding to the current coding unit may be determined according to the subunit similarity degree.

In an embodiment, the skip state of the intra-prediction mode corresponding to the current coding unit may be determined according to the subunit similarity degree. In response to a determination that the subunit similarity satisfies a preset similarity threshold, the skip state of the intra-prediction mode corresponding to the current coding unit may be set to be negative. Otherwise, the skip state of the intra-prediction mode corresponding to the current coding unit may be set to be positive. The similarity degree between every two adjacent subunits may be determined by calculating the degree of difference between the adjacent subunits, and used for determining the skip state of the intra-prediction mode corresponding to the current coding unit, thereby the number of selections of the intra-prediction mode corresponding to the current coding unit can be reduced, and the encoding efficiency can be improved.

In an embodiment, referring to FIG. 4, the subunits obtained from dividing the current coding unit may include a subunit A, a subunit B, a subunit C, and a subunit D. The subunit A is adjacent to the subunit B and the subunit C. The subunit D is adjacent to the subunit B and the subunit C. Degrees of difference between the subunit A respectively with the subunits B and C and between the subunit D respectively with the subunits B and C may be calculated, and the obtained difference degrees may be denoted by AB, AC, BD and CD respectively. The four difference degrees may form a difference degree set. A total difference degree Sum_ABCD may be obtained using the four difference degrees AB, AC, BD and CD. In response to a determination that the total difference degree Sum_ABCD is lower than a preset difference degree threshold T_ABCD, the maximum difference degree and the minimum difference degree may be identified from the difference degrees AB, AC, BD and CD. It is assumed that the maximum difference degree is AB, the minimum difference degree is CD. The similarity degree of the subunits A, B, C and D may be determined using the differences between AB and CD. The skip state of the intra-prediction mode corresponding to the current coding unit may be determined according to the similarity degree of the subunits A, B, C and D.

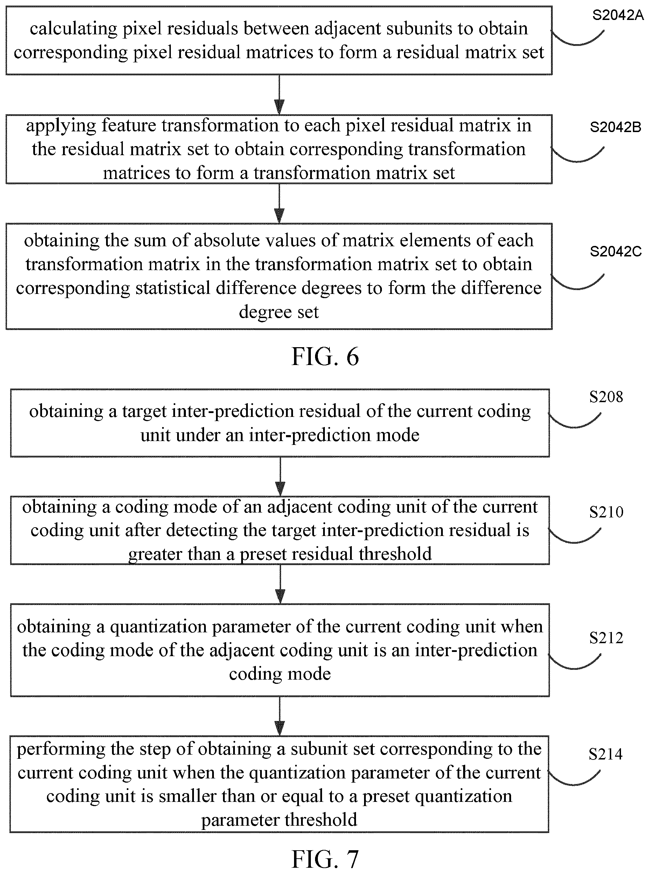

As shown in FIG. 6, in an embodiment, the procedure in step S2042 may include the following steps.

At step S2042A, pixel residuals between the adjacent subunits may be calculated to obtain corresponding pixel residual matrices to form a residual matrix set.

In an embodiment, a pixel residual matrix represents the difference between two matrices. The pixel residual matrix can be obtained by calculating a pixel residual between pixels of adjacent subunits, and a set formed by pixel residual matrices of adjacent subunits is the residual matrix set.

At step S2042B, feature transformation may be applied to each pixel residual matrix in the residual matrix set to obtain corresponding transformation matrices to form a transformation matrix set.

In an embodiment, the feature transformation is for projecting data from one space to another space. Data presents different data characteristics in different spaces. Feature transformation may transform each pixel residual matrix in the residual matrix set to obtain a corresponding transformation matrix. The transformation matrices form the transformation matrix set.

In an embodiment, the feature transformation may be Hadamard transform. The Hadamard transform uses a Hadamard matrix as the transformation matrix for transforming a matrix. The pixel residual matrices are transformed to obtain transformation matrices. A set formed by the transformation matrices is the transformation matrix set. The Hadamard matrix is a symmetric orthogonal matrix. A 2-order Hadamard transformation matrix is $H_2$ which can be expressed by formula (1):

$$H_2 = \begin{bmatrix} 1 & 1 \\ 1 & -1 \end{bmatrix} \ldots\ldots(1)$$

A 2N-order Hadamard matrix $H_{2N}$ can be represented by an N-order Hadamard transformation matrix $H_N$, as shown in formula (2):

$$H_{2N} = \begin{bmatrix} H_N & H_N \\ H_N & -H_N \end{bmatrix} \ldots\ldots(2)$$

In an embodiment, a transformation matrix can be obtained by applying the Hadamard transform to a pixel residual matrix AB, i.e., $T_{AB} = H \cdot AB$, where H is a Hadamard transformation matrix.

At step S2042C, the sum of absolute values of matrix elements of each transformation matrix in the transformation matrix set may be calculated to obtain corresponding statistical difference degrees which form a difference degree set.

In an embodiment, absolute values of the matrix elements in the transformation matrix may be calculated. Statistics of the absolute values of the matrix elements in the matrix may be collected to obtain the corresponding statistical difference degrees. The statistical difference degrees of the transformation matrices may form the difference degree set.

In an embodiment, the Hadamard transform may be applied to the pixel residual matrices. The difference degree obtained after calculating the absolute values of the transformed values can be more accurate than that obtained by directly calculating the sum of pixels in a pixel residual matrix of two subunits, thus can better reflect the degree of similarity or difference between the two adjacent subunits.

In an embodiment, assuming the transformation matrix after the pixel residual transformation is as shown in formula (3):

$$T_{AB} = \begin{bmatrix} 1 & 3 \\ 2 & -1 \end{bmatrix} \ldots\ldots(3)$$

the degree of difference between adjacent subunits A and B may be HADi = 1 + 2 + 3 + 1 = 7.

In an embodiment, after step S2044, the method may include the following step.

At step S2045, the skip state of the intra-prediction mode corresponding to the current coding unit may be positive in response to a determination that the total difference degree is higher than the preset difference degree threshold.

In an embodiment, the total difference degree may be compared with the preset difference degree threshold that is configured according to experience or the preset difference degree threshold determined according to the encoded coding unit. When the total difference degree is higher than the preset difference degree threshold, it indicates that the subunits corresponding to the current coding unit have big differences, and the skip state of the inter-prediction mode corresponding to the current coding unit may be set to be positive which indicates the inter-prediction mode is more appropriate for encoding of the current coding unit. Determining the difference degree of the current coding unit using the total difference degree is because considering the similarity of the subunits as a whole can better reflect the integrity of the coding unit.

In an embodiment, in response to a determination that the total difference degree is lower than or equal to the preset difference degree threshold, degrees of difference between some subunits may be selected from the degrees of difference between the subunits in a user-defined manner. The degrees of difference between some subunits may be calculated by using a user-defined algorithm, and the skip state of the intra-prediction mode corresponding to the current coding unit may be determined according to a result of the calculation.

In an embodiment, the highest difference degree and the lowest difference degree may be selected from the degrees of difference between the subunits as the maximum difference degree and the minimum difference degree respectively. The maximum difference degree and the minimum difference degree may be calculated according to the user-defined algorithm to obtain a corresponding calculation result.

In an embodiment, the procedure in step S2048 may include: calculating the ratio of the maximum difference degree to the minimum difference degree.

In an embodiment, after the maximum difference degree and the minimum difference degree are obtained, the ratio of the maximum difference degree to the minimum difference degree may be calculated. The ratio of the maximum difference degree to the minimum difference degree reflect the difference between the maximum value and the minimum value. The difference between the maximum difference degree and the minimum difference degree may reflect the largest difference between subunits.

In an embodiment, the procedure in step S2049 may include:
determining the skip state of the intra-prediction mode corresponding to the current coding unit to be negative in response to a determination that the ratio is smaller than a preset threshold.

In an embodiment, the ratio being smaller than the preset threshold indicate the difference degree is low, that is, the similarity of subunits of the current coding unit is relatively high, and the skip state of the intra-prediction mode corresponding to the current coding unit may be set to be negative which indicates the intra-prediction mode is appropriate for the current coding unit. The preset threshold may be configured according to experience, or may be obtained through calculation according to a mode of an encoded coding unit and the sum of Hadamard transform differences of the encoded coding unit. For example, the preset threshold may be determined according to the sum or average value of Hadamard transform differences of a coding unit that has been encoded using intra-prediction.

On the basis of the total difference degree, the overall difference and local differences can be comprehensively considered using the ratio of the maximum difference degree to the minimum difference degree, so that the skip state of the intra-prediction mode corresponding to the current coding unit may be determined more accurately.

In an embodiment, after calculating the ratio of the maximum difference degree to the minimum difference degree, the method may include the following step.

At step S2053, the skip state of the intra-prediction mode corresponding to the current coding unit may be set to be positive in response to a determination that the ratio is larger than the preset threshold and the current coding unit is eligible for coding division.

In an embodiment, the coding dividing processing refers to dividing an image or a coding unit according to a coding standard. Different coding standards correspond to different coding dividing processing methods. Whether the current coding unit is eligible for coding dividing processing may be determined according to whether the current coding unit is the smallest coding unit. If the current coding unit is the smallest coding unit, it indicates that the current coding unit is not eligible for coding division. If the current coding unit is not the smallest coding unit, it indicates that the current coding unit is eligible for coding division. When it is determined that the ratio of the maximum difference degree to the minimum value difference degree is larger than the preset threshold, it indicates that the similarity of the subunits of the current coding unit is relatively low, and the skip state of the intra-prediction mode corresponding to the current coding unit may be determined according to coding dividing processing conditions of the current coding unit. If the coding of the current coding unit is eligible for coding division, the skip state of the intra-prediction mode corresponding to the current coding unit may be set to be positive, and the current coding unit may skip the intra-prediction mode, thereby selections of the intra-prediction mode can be reduced, and the video encoding efficiency can be improved.

In an embodiment, after calculating a ratio of the maximum difference degree to the minimum difference degree, the method may include:
determining the skip state of the intra-prediction mode corresponding to the current coding unit to be negative in response to a determination that the ratio is greater than the preset threshold and the current coding unit is not eligible for coding division.

In an embodiment, when it is determined that the ratio of the maximum difference degree to the minimum value difference degree is greater than the preset threshold, it indicates that the similarity of the subunits of the current coding unit is relatively low, and the skip state of the intra-prediction mode corresponding to the current coding unit may be determined according to the coding division conditions of the current coding unit. If coding of the current coding unit cannot be divided further, the skip state of the intra-prediction mode corresponding to the current coding unit may be set to be negative which indicates that the intra-prediction mode is appropriate for the current coding unit.

In this embodiment, by determining the skip state of the intra-prediction mode corresponding to the current coding unit according to a coding division state of the current coding unit, the number of selections of the intra-prediction mode can be reduced through the coding dividing processing of the current coding unit, thereby the video encoding efficiency can be improved.

As shown in FIG. 7, in an embodiment, before step S202, the method may include the following steps.

At step S208, a target inter-prediction residual of the current coding unit under the inter-prediction mode may be obtained.

In an embodiment, the inter-prediction may be performed on the current coding unit to obtain one or multiple coding modes under the inter-prediction mode, and a prediction residual corresponding to the optimal coding mode may be selected as a target inter-prediction residual. The optimal coding mode may be determined according to the inter-prediction residuals, or may be determined according to inter-prediction coding costs. For example, the minimum inter-prediction residual may be selected as the target inter-prediction residual.

At step S210, the coding mode of an adjacent coding unit of the current coding unit may be obtained in response to a determination that the target inter-prediction residual is detected to be greater than a preset residual threshold.

In an embodiment, the preset residual threshold may be set according to experience, or may be determined according to the residual of an encoded unit. For example, the residual may be determined according to an adjacent encoded unit. When the target prediction residual obtained in step S202 is greater than the preset residual, it indicates that the inter-prediction mode is not necessarily the optimal prediction mode. Whether the intra-prediction mode is selected cannot be determined according to the target prediction residual of the current coding unit. The coding mode of the adjacent coding unit of the current coding unit may be further obtained. Whether the intra-prediction mode is selected is further determined according to the coding mode of the adjacent coding unit.

At step S212, a quantization parameter of the current coding unit may be obtained in response to a determination that the coding mode of the adjacent coding unit is an inter-prediction coding mode.

In an embodiment, if coding modes of the adjacent coding units of the current coding unit do not include an intra-frame coding mode, it indicates that whether to select the intra-prediction mode cannot be determined solely according to the coding mode of adjacent units, and the quantization parameter of the current coding unit may be further obtained. The quantization parameter reflects a compression state of spatial details. A small quantization parameter means that most of the details may be reserved. As the quantization parameter increases, some of the details of the picture are lost, the code rate decreases, image distortion is increased, and the quality declines. The quantization parameter may be used to measure coding quality. Therefore, determining the skip state of the current coding unit according to the quantization parameter can effectively ensure the video coding quality.

At step S214, the step of obtaining the subunit set corresponding to the current coding unit may be performed in response to a determination that the quantization parameter of the current coding unit is smaller than or equal to a preset quantization parameter threshold.

In an embodiment, if the quantization parameter of the current coding unit is smaller than or equal to the preset quantization parameter threshold, it indicates that more details of the picture are reserved, step S202 may be performed to obtain the subunit set corresponding to the current coding unit.

In this embodiment, the skip state of the intra-prediction mode corresponding to the current coding unit determined according to the coding mode of the adjacent coding unit of the current coding unit and/or the quantization parameter of the current coding unit may be more accurate, thereby the encoding efficiency can be improved, and the encoding loss can be reduced.

In an embodiment, after step S210, the method may also include the following step.

At step S216, the skip state of the intra-prediction mode corresponding to the current coding unit may be determined to be negative in response to a determination that the coding mode of the adjacent coding unit is an intra-frame coding mode.

In an embodiment, in response to a determination that the adjacent coding unit has an intra-frame coding mode, the skip state of the intra-prediction mode corresponding to the current coding unit may be set to be negative, the intra-prediction mode may be appropriate for the current coding unit. When the adjacent coding unit has an intra-frame coding mode, it indicates image contents of the adjacent coding unit is relatively similar, and it is highly probable that image contents of the coding unit approximate to the adjacent coding unit is similar to image contents of the adjacent coding unit, thus an intra-prediction mode can be selected.

In an embodiment, after step S214, the method may include the following step.

At step S218, the skip state of the intra-prediction mode corresponding to the current coding unit may be determined to be negative in response to a determination that the quantization parameter of the current coding unit is greater than the preset quantization parameter threshold.

In an embodiment, the quantization parameter represents the coding step length, and a longer coding step represents that more details of an image may be lost. When the quantization parameter of the current coding unit is greater than the preset quantization parameter threshold, which represents that the current coding unit has a relatively long coding step, it indicates that the coding has a relatively high degree of distortion and an intra-prediction mode may be selected, thus the skip state of the intra-prediction mode corresponding to the current coding unit may be set to be negative.

In this embodiment, the skip state of the intra-prediction mode corresponding to the current coding unit can be determined according to a value of the quantization parameter of the current coding unit. The quantization parameter reflects the video encoding quality. The optimal coding mode can ensure certain encoding quality while compressing the image to a minimum size. The skip state of the intra-prediction mode corresponding to the current coding unit determined according to the quantization parameter can be more accurate, and the video encoding quality can be guaranteed to a certain extent.

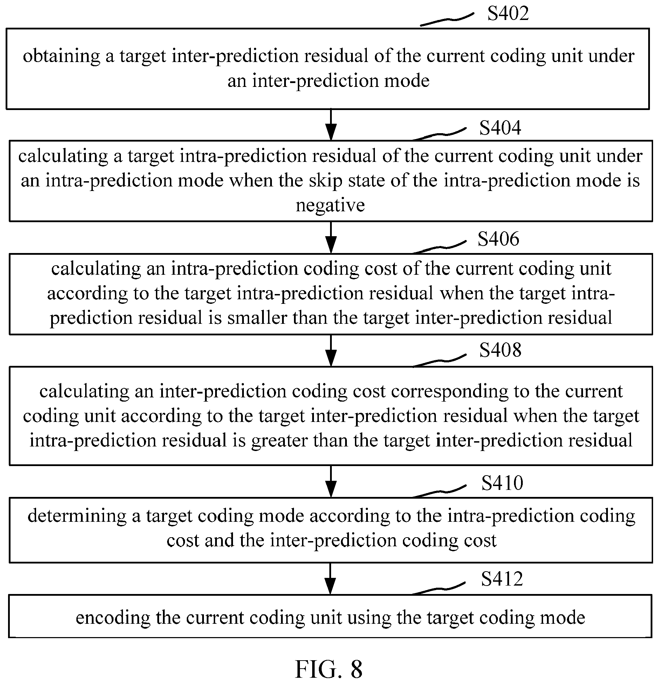

As shown in FIG. 8, in an embodiment, the video encoding method may also include the following steps.

At step S402, a target inter-prediction residual of the current coding unit under an inter-prediction mode may be obtained.

In video coding, redundant information of an image may include temporal redundant information, and the inter-prediction can reduce the temporal redundant information. When a video image is inputted into an encoder, the video image may be divided into one or multiple coding units, and a target prediction mode corresponding to the coding unit may be selected. The prediction mode may be configured according to different video coding standards.

In an embodiment, coding dividing processing may be applied to a video image to obtain coding units. One of the coding units may be selected as a current coding unit. Inter-prediction may be applied to the current coding unit to obtain one or multiple coding modes under the inter-prediction mode, and a prediction residual corresponding to an optimal coding mode may be selected as a target inter-prediction residual.

At step S404, a target intra-prediction residual of the current coding unit under the intra-prediction mode in response to a determination that the skip state of the intra-prediction mode is negative.

The target intra-prediction residual may be the minimum coding cost among coding costs corresponding to the intra-frame coding modes of the current coding unit in the intra-prediction mode. The coding cost of the current coding unit may be obtained by calculating the quantization parameter and/or the corresponding residual of the current coding unit. During encoding of the current coding unit, the intra-prediction mode may be skipped. The target intra-prediction residual of the current coding unit in the intra-prediction mode may be calculated.

In an embodiment, because coding costs corresponding to multiple coding modes need to be calculated, a coding cost calculation method with relatively low complexity may be used to calculate relatively coarse coding costs. The coding mode having the minimum coding cost in the coarse coding costs may be selected as the intra-frame coding mode of the current coding unit, and the intra-prediction residual corresponding to the intra-frame coding mode may be used as the target intra-prediction residual.

At step S406, an intra-prediction coding cost of the current coding unit may be calculated using the target intra-prediction residual in response to a determination that the target intra-prediction residual is smaller than the target inter-prediction residual.

In an embodiment, the target intra-prediction residual may be compared with the target inter-prediction residual. When the target intra-prediction residual is smaller than the target inter-prediction residual, it indicates that the intra-prediction residual is smaller, i.e., it is optimal to select an intra-prediction mode for coding in a current layer. Therefore, the intra-frame coding cost of the current coding unit may be calculated according to the target intra-prediction residual.

In an embodiment, a more accurate intra-prediction coding cost may be obtained by using an algorithm with higher encoding complexity.

At step S408, an inter-prediction coding cost corresponding to the current coding unit may be calculated using the target inter-prediction residual in response to a determination that the intra-prediction residual is greater than the target inter-prediction residual.

In an embodiment, when the target intra-prediction residual is greater than the target inter-prediction residual, it indicates that the intra-prediction residual is smaller. The inter-frame coding cost of the current coding unit may be calculated using the target intra-prediction residual.

In an embodiment, because only the coding cost of the coding mode corresponding to the target inter-prediction residual is calculated, a more accurate inter-frame coding cost can be obtained by using an algorithm with higher encoding complexity.

At step S410, a target coding mode may be determined according to the intra-frame coding cost and the inter-frame coding cost.

In an embodiment, the target coding mode may be determined according to the intra-frame coding cost and/or the inter-frame coding cost. The target coding mode may be determined according to the smallest coding cost of the intra-frame coding costs and the inter-frame coding costs.

At step S412, the current coding unit may be encoded according to the target coding mode.

In an embodiment, after the target coding mode is determined, the current coding unit may be encoded using the corresponding coding mode.

In an embodiment, the HEVC is used as an example. If the coding cost is COST, $COST = D + \lambda R$, where D indicates a distortion degree of an image coding block corresponding to the current coding unit, D may be obtained through calculation using an absolute difference and an SAD operation, $\lambda$ is a Lagrange constant, and R indicates the number of bits occupied by the image coding block corresponding to the coding unit. The intra-frame coding cost and the inter-frame coding cost may be calculated using the coding cost calculation method. The target coding mode may be determined according to the intra-frame coding cost and the inter-frame coding cost. The optimal coding mode is the one which can compress the video to the minimal size while a certain degree of distortion is allowed. Therefore, the coding cost determined according to the distortion rate and the number of bits can achieve a balance between the compression rate and the distortion rate.

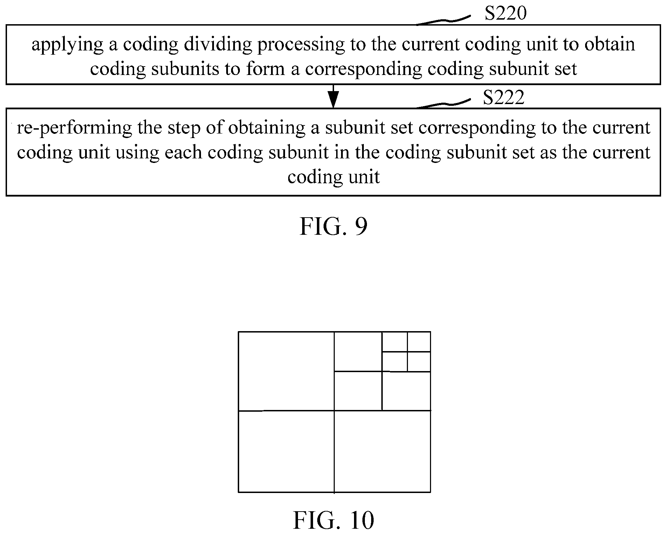

As shown in FIG. 9, in an embodiment, the video encoding method may also include the following steps.

At step S220, coding dividing processing may be applied to the current coding unit to obtain coding subunits which form a corresponding coding subunit set.

In an embodiment, one coding unit may be divided into smaller coding units through coding dividing processing. The manner and the number of times of coding dividing processing may be defined according to different coding standards.

As shown in FIG. 10, taking HEVC as an example, the largest coding unit may be $64 \times 64$ pixels, and may be coding divided into four coding subunits of $32 \times 32$ pixels. the four coding subunits of $32 \times 32$ pixels may be coding divided into 16 coding subunits of $16 \times 16$ pixels which may be coding divided into 64 coding subunits of $8 \times 8$ pixels.

At step S222, the step of obtaining the subunit set corresponding to the current coding unit may be re-performed by using each coding subunit in the coding subunit set as the current coding unit.

In an embodiment, each coding subunit in the coding subunit set is used as the current coding unit, and step S202 is performed to determine the skip state of the intra-prediction mode corresponding to each coding subunit. In a case that the skip state of the intra-prediction mode corresponding to the coding subunit is yes, the intra-prediction mode is skipped for the coding subunit, and the coding subunit is encoded according to the intra-prediction mode, so that the coding subunits are encoded quickly.

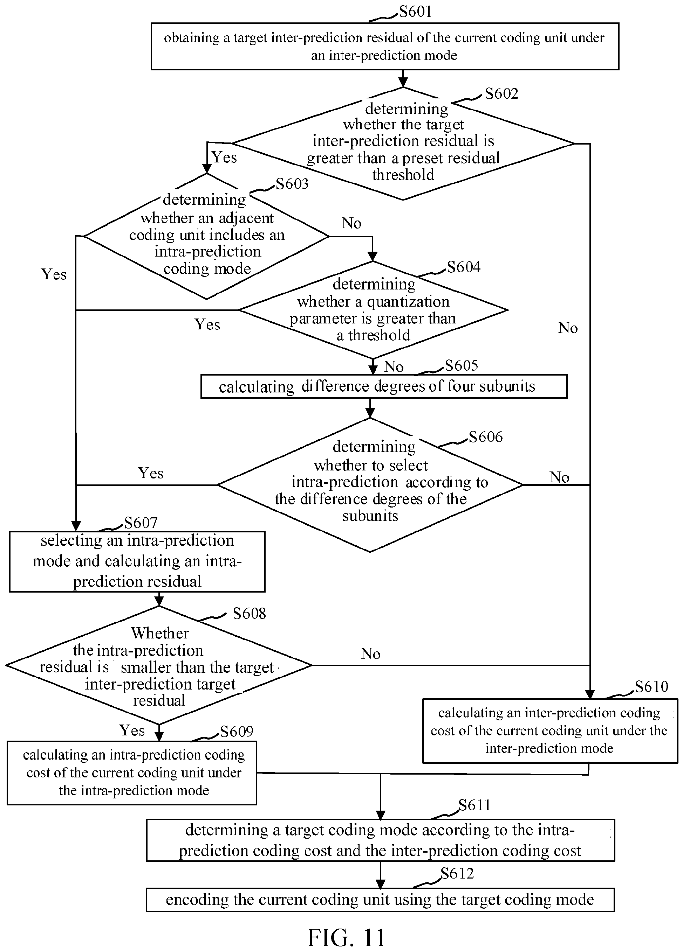

As shown in FIG. 11, in an embodiment, the video encoding method may include the following steps.

At step S601, a target inter-prediction residual of a current coding unit under an inter-prediction coding prediction mode may be obtained. Inter-prediction coding may be firstly applied to the current coding unit. An optimal inter-prediction mode may be selected using prediction residuals. The prediction residual corresponding to the optimal inter-prediction mode may serve as the target inter-prediction residual.

At step S602, it may be determined whether the target prediction residual is greater than a preset residual threshold. A determination as to whether an intra-prediction mode is to be selected may be made according to the target inter-prediction residual. If the target inter-prediction residual is not greater than the preset residual threshold, it may be determined unnecessary to select an intra-prediction mode, and step S610 may be directly performed. Otherwise, if the target inter-prediction residual is greater than the preset residual threshold, the procedure in step S603 may be performed.

At step S603, if encoded adjacent coding units of the current coding unit include an intra-prediction coding unit, it may be determined necessary to select an intra-prediction mode for the current coding unit, and step S607 may be performed. Otherwise, the procedure in step S604 may be performed for further judgment.

At step S604, it may be determined whether the quantization parameter of the current coding unit is greater than a preset quantization parameter threshold. In response to a determination that the quantization parameter is greater than the preset quantization parameter threshold, the procedure in step S605 may be performed. In response to a determination that the quantization parameter is smaller than the preset quantization parameter threshold, the procedure in step S607 may be performed.

At step S605, difference degrees of corresponding four subunits obtained by preset dividing processing of the current coding unit may be calculated.

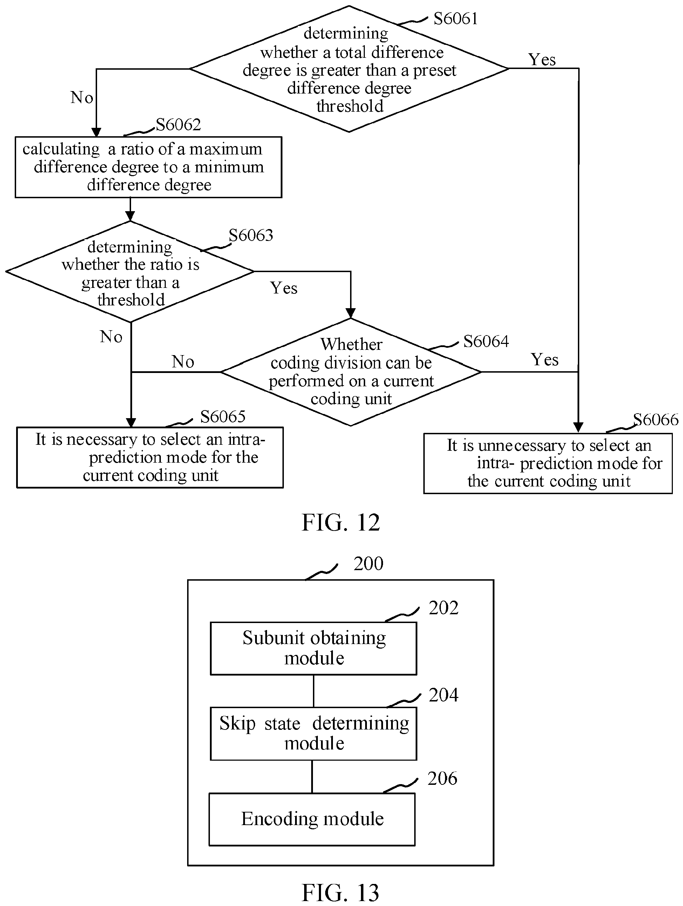

At step S606, it may be determined whether to select an intra-prediction mode according to the difference degrees of the four subunits. If the difference degrees are small, the intra-prediction mode is selected, and step S607 may be performed. If the difference degrees are large, the procedure in step S610 may be performed. As shown in FIG. 12, the determining step may include the following steps.

At step S6061, it may be determined whether the total difference degree is greater than a preset difference degree threshold. The total difference degree may be obtained using four degrees of difference which include the degree of difference between every two adjacent units among the four subunits. If the total difference degree is greater than the preset difference degree threshold, the procedure in step S6066 may be performed. Otherwise, if the total difference degree is smaller than or equal to the preset difference degree threshold, the procedure in step S6062 may be performed.

At step S6062, the ratio of the maximum difference degree to a minimum difference degree of the four adjacent subunits may be calculated.

At step S6063, it may be determined whether the ratio obtained in step S6063 is greater than a preset threshold. If the ratio is greater than the preset threshold, the procedure in step S6064 may be performed. Otherwise, the procedure in step S6065 may be performed.

At step S6064, it may be determined whether next-layer coding dividing processing can be applied to the current coding unit. If the next-layer coding dividing processing can be applied to the current coding unit, the procedure in step S6066 may be performed. Otherwise, the procedure in step S6065 may be performed.

At step S6065, an intra-prediction mode may be selected for the current coding unit, and the procedure in step S607 may be performed.

At step S6066, it may be determined unnecessary to select an intra-prediction mode for the current coding unit, and the procedure in step S610 may be performed.

At step S607, an intra-prediction mode may be selected and an intra-prediction residual may be calculated. The intra-prediction mode may be selected for the current coding unit, and the minimum prediction residual may be selected from prediction residuals of a plurality of coding modes as the intra-prediction residual.

At step S608, it may be determined whether the intra-prediction residual is smaller than the target inter-prediction residual. If the intra-prediction residual is smaller than the target inter-prediction residual, the procedure in step S609 may be performed. Otherwise, the procedure in step S610 may be performed.

At step S609, an intra-frame coding cost of the current coding unit under an intra-prediction mode may be calculated.

At step S610, an inter-frame coding cost of the current coding unit under an inter-prediction mode may be calculated.

At step S611, a target coding mode may be determined according to the intra-frame coding costs and the inter-frame coding costs. The target coding mode may be the coding mode corresponding to the minimum coding cost in the intra-frame coding cost and the inter-frame coding cost.

At step S612, the current coding unit may be encoded using the target coding mode.

As shown in FIG. 13, in an embodiment, a video encoding apparatus is provided, and may include:

a subunit obtaining module 202, which may obtain a subunit set corresponding to a current coding unit, the subunit set may include subunits obtained by applying preset dividing processing to the current coding unit;

a skip state determining module 204, which may determine a skip state of an intra-prediction mode corresponding to the current coding unit according to degrees of difference between subunits in the subunit set; and

an encoding module 206, which may skip execution of the intra-prediction mode for the current coding unit in response to a determination that the skip state of the intra-prediction mode is positive, and encode the current coding unit using an inter-prediction mode.

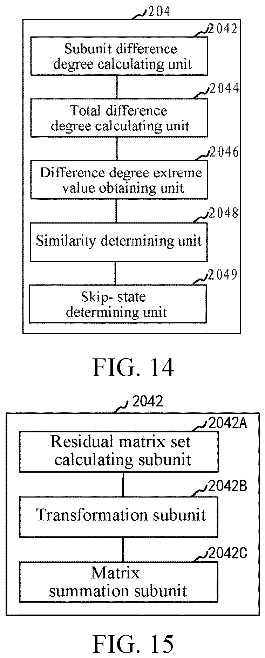

As shown in FIG. 14, in an embodiment, the skip state determining module 204 may include:

a subunit difference degree calculating unit 2042, which may calculate degrees of difference between adjacent subunits to form a difference degree set;

a total difference degree calculating unit 2044, which may obtain a total difference degree using the degrees of difference between adjacent subunits;

a difference degree extreme value obtaining unit 2046, which may obtain the maximum difference degree and the minimum difference degree from the difference degree set in response to a determination that the total difference degree is smaller than a preset difference degree threshold;

a similarity determining unit 2048, which may determine a subunit similarity degree corresponding to the current coding unit according to the maximum difference degree and the minimum difference degree; and

a skip state determining unit 2049, which may determine the skip state of the intra-prediction mode corresponding to the current coding unit according to the subunit similarity degree.

As shown in FIG. 15, in an embodiment, the subunit difference degree calculating unit 2042 may include:

a residual matrix set calculating subunit 2042A, which may calculate pixel residuals between the adjacent subunits to obtain corresponding pixel residual matrices which may form a residual matrix set;

a transformation subunit S2042B, which may apply feature transformation to each pixel residual matrix in the residual matrix set to obtain corresponding transformation matrices which may form a transformation matrix set; and

a matrix summation subunit S2042C, which may obtain the sum of absolute values of matrix elements in each transformation matrix in the transformation matrix set to obtain corresponding statistical difference degrees to form the difference degree set.

In an embodiment, the skip state determining unit 2049 may also determine the skip state of the intra-prediction mode corresponding to the current coding unit to be positive in response to a determination that the total difference degree is greater than the preset difference degree threshold.

In an embodiment, the similarity determining unit 2048 may also calculate the ratio of the maximum difference degree to the minimum difference degree.

The skip state determining unit 2049 may also determine the skip state of the intra-prediction mode corresponding to the current coding unit to be negative in response to a determination that the ratio is smaller than a preset threshold.

In an embodiment, the skip state determining unit 2049 may also determine the skip state of the intra-prediction mode corresponding to the current coding unit to be positive in response to a determination that the ratio is greater than the preset threshold and the current coding unit is eligible for coding division.

In an embodiment, the skip state determining unit 2049 is further configured to determine the skip state of the intra-prediction mode corresponding to the current coding unit to be no in a case that the ratio is greater than the preset threshold and the current coding unit is not eligible for coding division.

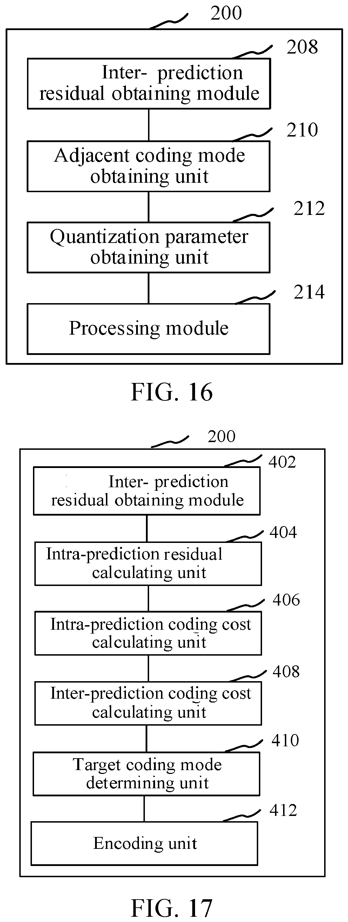

As shown in FIG. 16, in an embodiment, the video encoding apparatus 200 may include:

> an inter-prediction residual obtaining module 208, which may obtain a target inter-prediction residual of the current coding unit under the inter-prediction mode;

> an adjacent coding mode obtaining unit 210, which may obtain a coding mode of an adjacent coding unit of the current coding unit after detecting that the target inter-prediction residual is greater than a preset residual threshold;

> a quantization parameter obtaining unit 212, which may obtain a quantization parameter of the current coding unit in response to a determination that the coding mode of the adjacent coding unit is an inter-frame coding mode; and

> a processing module 214, which may trigger the subunit obtaining module 202 in response to a determination that the quantization parameter of the current coding unit is smaller than or equal to a preset quantization parameter threshold.

In an embodiment, the skip state determining module 204 may also determine the skip state of the intra-prediction mode corresponding to the current coding unit to be negative in response to a determination that the coding mode of the adjacent coding unit is an intra-frame coding mode.

In an embodiment, the skip state determining module 204 may also determine the skip state of the intra-prediction mode corresponding to the current coding unit to be negative in response to a determination that the quantization parameter of the current coding unit is greater than the preset quantization parameter threshold.

As shown in FIG. 17, in an embodiment, the encoding module 206 may include:

> an inter-prediction residual obtaining unit 2061, which may obtain a target inter-prediction residual of the current coding unit under the inter-prediction mode;

> an intra-frame residual calculating unit 2062, which may calculate a target intra-prediction residual of the current coding unit under the intra-prediction mode in response to a determination that the skip state of the intra-prediction mode is negative;

> an intra-frame coding cost calculating unit 2063, which may calculate an intra-frame coding cost of the current coding unit according to the target intra-prediction residual in response to a determination that the target intra-prediction residual is smaller than the target inter-prediction residual;

> an inter-frame coding cost calculating unit 2064, which may calculate an inter-frame coding cost corresponding to the current coding unit according to the target inter-prediction residual in response to a determination that the intra-prediction residual is greater than the target inter-prediction residual;

> a target coding mode determining unit 2065, which may determine a target coding mode according to the intra-frame coding cost and the inter-frame coding cost; and

> an encoding unit 2066, which may encode the current coding unit using the target coding mode.

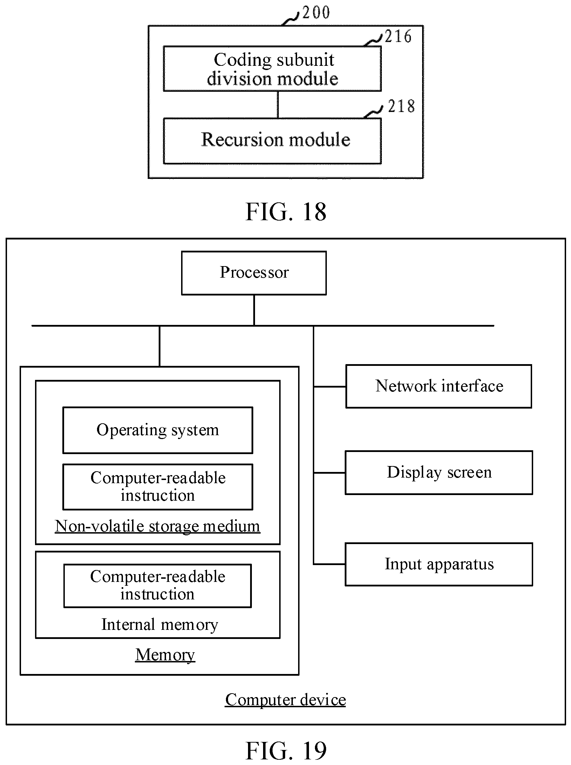

As shown in FIG. 18, in an embodiment, the video encoding apparatus 200 may also include:

> a coding subunit dividing processing module 216, which may apply coding dividing processing to the current coding unit to obtain coding subunits which may form a corresponding coding subunit set; and

> a recursion module 218, which may use each coding subunit in the coding subunit set as the current coding unit, and trigger the subunit obtaining module 202.

In an embodiment, a computer device is also provided. An internal structure of the computer device may be as shown in FIG. 19. The computer device may include a video encoding apparatus. The video encoding apparatus may include modules, and each module may be wholly or partially implemented by software, hardware, or a combination thereof.

FIG. 19 is a schematic diagram illustrating the internal structure of a computer device in an embodiment. The computer device may include a processor, a memory, a network interface, an input apparatus and a display screen which are connected using a system bus. The memory may include a non-volatile storage medium and an internal memory. The non-volatile storage medium of the computer device may store an operating system, and may also store computer-readable instructions executable by the processor to implement the video encoding method. The internal memory may also store computer-readable instructions executable by the processor to implement the video encoding method. The display screen of the computer device may be a liquid crystal display screen or an electronic ink display screen. The input apparatus of the computer device may be a touch layer covering the display screen, or may be a key, a trackball or a touchpad disposed on a housing of the computer device, and may also be an external keyboard, touchpad, mouse, or the like.

A person skilled in the art may understand that, the structure as shown in FIG. 19 is only a block diagram of a partial structure related to the solution of this application, and does not constitute a limitation to the computer device to which the solution of this application is applied. Specifically, the computer device may include more or fewer components than those shown in the figure, or some components may be combined, or a different component deployment may be used.

In an embodiment, the video encoding apparatus provided in this application may be implemented in the form of computer-readable instructions which may run on the computer device as shown in FIG. 19. The memory of the computer device may store readable instruction modules constituting the video encoding apparatus, for example, the subunit obtaining module, the skip state determining module, and the encoding module as shown in FIG. 13. The computer-readable instructions constituted by the readable instruction modules may cause the processor to perform the steps of the video encoding method described in the embodiments of this application in this specification.

In an embodiment, one or multiple non-volatile storage media storing computer-readable instructions are provided. The computer-readable instructions, when executed by one or more processors, may cause the one or multiple processors to perform the following steps: obtaining a subunit set corresponding to a current coding unit, the subunit set including subunits obtained by applying preset dividing processing to the current coding unit; determining a skip state of an intra-prediction mode corresponding to the current coding unit according to degrees of difference between subunits in the subunit set; and skipping execution of the intra-prediction mode for the current coding unit in response to a determination that the skip state of the intra-prediction mode is positive, and encoding the current coding unit using an inter-prediction mode.

In an embodiment, the procedure of determining the skip state of an intra-prediction mode corresponding to the current coding unit according to the degrees of difference between subunits in the subunit set may include: calculating degrees of difference between adjacent subunits to form a difference degree set; obtaining a total difference degree using the degrees of difference between adjacent subunits; obtaining the maximum difference degree and the minimum difference degree from the difference degree set in response to a determination that the total difference degree is lower than a preset difference degree threshold; determining a subunit similarity degree corresponding to the current coding unit according to the maximum difference degree and the minimum difference degree; and determining the skip state of the intra-prediction mode corresponding to the current coding unit according to the subunit similarity degree.

In an embodiment, the procedure of calculating the degrees of difference between adjacent subunits to form a difference degree set may include: calculating pixel residuals between the adjacent subunits to obtain corresponding pixel residual matrices to form a residual matrix set; applying feature transformation to each pixel residual matrix in the residual matrix set to obtain corresponding transformation matrices to form a transformation matrix set; and calculating the sum of absolute values of matrix elements in each transformation matrix in the transformation matrix set to obtain corresponding statistical difference degrees to form the difference degree set.

In an embodiment, after the step of obtaining a total difference degree using the degrees of difference between adjacent subunits, the computer-readable instructions may further cause the processor to perform the following step: determining the skip state of the intra-prediction mode corresponding to the current coding unit to be positive in response to a determination that the total difference degree is higher than the preset difference degree threshold.

In an embodiment, the procedure of determining the subunit similarity degree corresponding to the current coding unit according to the maximum difference degree and the minimum difference degree and determining the skip state of the intra-prediction mode corresponding to the current coding unit according to the subunit similarity degree may include: calculating the ratio of the maximum difference degree to the minimum difference degree; and determining the skip state of the intra-prediction mode corresponding to the current coding unit to be negative in response to a determination that the ratio is smaller than a preset threshold.

In an embodiment, after calculating the ratio of the maximum difference degree to the minimum difference degree, the computer-readable instructions may further cause the processor to perform the following step: determining the skip state of the intra-prediction mode corresponding to the current coding unit to be positive in response to a determination that the ratio is greater than the preset threshold and the current coding unit is eligible for coding division.

In an embodiment, after calculating the ratio of the maximum difference degree to the minimum difference degree, the computer-readable instructions may further cause the processor to perform the following step: determining the skip state of the intra-prediction mode corresponding to the current coding unit to be negative in response to a determination that the ratio is greater than the preset threshold and the current coding unit is not eligible for coding division.

In an embodiment, before obtaining the subunit set corresponding to the current coding unit, the subunit set including subunits obtained by applying preset dividing processing to the current coding unit, the computer-readable instructions may further cause the processor to perform the following steps: obtaining a target inter-prediction residual of the current coding unit under the inter-prediction mode; obtaining a coding mode of an adjacent coding unit of the current coding unit after detecting that the target inter-prediction residual is greater than a preset residual threshold; obtaining a quantization parameter of the current coding unit in response to a determination that the coding mode of the adjacent coding unit is an inter-frame coding mode; and performing the step of obtaining the subunit set corresponding to the current coding unit in response to a determination that the quantization parameter of the current coding unit is smaller than or equal to a preset quantization parameter threshold.

In an embodiment, after obtaining the coding mode of an adjacent coding unit of the current coding unit, the computer-readable instructions may further cause the processor to perform the following step: determining the skip state of the intra-prediction mode corresponding to the current coding unit to be negative in response to a determination that the coding mode of the adjacent coding unit is an intra-prediction coding mode.

In an embodiment, after obtaining the quantization parameter of the current coding unit, the computer-readable instructions may further cause the processor to perform the following step: determining the skip state of the intra-prediction mode corresponding to the current coding unit to be negative in response to a determination that the quantization parameter of the current coding unit is greater than the preset quantization parameter threshold.

In an embodiment, the computer-readable instructions may further cause the processor to perform the following steps: obtaining a target inter-prediction residual of the current coding unit in the inter-prediction mode; calculating a target intra-prediction residual of the current coding unit under the intra-prediction mode in response to a determination that the skip state of the intra-prediction mode is negative; calculating an intra-frame coding cost of the current coding unit according to the target intra-prediction residual in response to a determination that the target intra-prediction residual is smaller than the target inter-prediction residual; calculating an inter-frame coding cost corresponding to the current coding unit according to the target inter-prediction residual in response to a determination that the intra-prediction residual is greater than the target inter-prediction residual; determining a target coding mode according to the intra-frame coding cost and the inter-frame coding cost; and encoding the current coding unit using the target coding mode.

In an embodiment, the computer-readable instructions may further cause the processor to perform the following steps: applying coding dividing processing to the current coding unit to obtain coding subunits to form a corresponding coding subunit set; and using each coding subunit in the coding subunit set as the current coding unit, and returning to the step of obtaining the subunit set corresponding to the current coding unit.

In an embodiment, a computer device is provided, and may include a memory and a processor. The memory may store computer-readable instructions executable by the processor to perform the following steps: obtaining a subunit set corresponding to a current coding unit, the subunit set including subunits obtained by preset dividing processing of the current coding unit; determining a skip state of an intra-prediction mode corresponding to the current coding unit according to degrees of difference between subunits in the subunit set; and skipping execution of the intra-prediction mode for the current coding unit in response to a determination that the skip state of the intra-prediction mode is positive, and encoding the current coding unit using an inter-prediction mode.

In an embodiment, the procedure of determining the skip state of an intra-prediction mode corresponding to the current coding unit according to the degrees of difference between subunits in the subunit set may include: calculating degrees of difference between adjacent subunits to form a difference degree set; obtaining a total difference degree using the degrees of difference between adjacent subunits; obtaining the maximum difference degree and the minimum difference degree from the difference degree set in response to a determination that the total difference degree is smaller than a preset difference degree threshold; determining a subunit similarity degree corresponding to the current coding unit according to the maximum difference degree and the minimum difference degree; and determining the skip state of the intra-prediction mode corresponding to the current coding unit according to the subunit similarity degree.

In an embodiment, the procedure of calculating degrees of difference between adjacent subunits to form a difference degree set may include: calculating pixel residuals between the adjacent subunits to obtain corresponding pixel residual matrices to form a residual matrix set; applying feature transformation to each pixel residual matrix in the residual matrix set to obtain corresponding transformation matrices to form a transformation matrix set; and calculating the sum of absolute values of matrix elements in each transformation matrix in the transformation matrix set to obtain corresponding statistical difference degrees to form the difference degree set.

In an embodiment, after calculating a total difference degree using the degrees of difference between adjacent subunits, the processor may perform the following step by executing the computer-readable instructions: determining the skip state of the intra-prediction mode corresponding to the current coding unit to be positive in response to a determination that the total difference degree is greater than the preset difference degree threshold.

In an embodiment, the procedures of determining the subunit similarity degree corresponding to the current coding unit according to the maximum difference degree and the minimum difference degree and determining the skip state of the intra-prediction mode corresponding to the current coding unit according to the subunit similarity degree may include: calculating the ratio of the maximum difference degree to the minimum difference degree; and determining the skip state of the intra-prediction mode corresponding to the current coding unit to be negative in response to a determination that the ratio is smaller than a preset threshold.

In an embodiment, after the procedure of calculating the ratio of the maximum difference degree to the minimum difference degree, the processor may performs the following step by executing the computer-readable instructions: determining the skip state of the intra-prediction mode corresponding to the current coding unit to be positive in response to a determination that the ratio is greater than the preset threshold and the current coding unit is eligible for coding division.

In an embodiment, after the procedure of calculating the ratio of the maximum difference degree to the minimum difference degree, the processor may perform the following step by executing the computer-readable instructions: determining the skip state of the intra-prediction mode corresponding to the current coding unit to be negative in response to a determination that the ratio is greater than the preset threshold and the current coding unit is not eligible for coding division.

In an embodiment, before obtaining the subunit set corresponding to the current coding unit which includes subunits obtained by preset dividing processing of the current coding unit, the processor may perform the following steps by executing the computer-readable instructions: obtaining a target inter-prediction residual of the current coding unit under the inter-prediction mode; obtaining a coding mode of an adjacent coding unit of the current coding unit after detecting that the target inter-prediction residual is greater than a preset residual threshold; obtaining a quantization parameter of the current coding unit in response to a determination that the coding mode of the adjacent coding unit is an inter-frame coding mode; and performing the step of obtaining the subunit set corresponding to the current coding unit in response to a determination that the quantization parameter of the current coding unit is smaller than or equal to a preset quantization parameter threshold.

In an embodiment, after obtaining the coding mode of an adjacent coding unit of the current coding unit, the processor may perform the following step by executing the computer-readable instructions: determining the skip state of the intra-prediction mode corresponding to the current coding unit to be negative in response to a determination that the coding mode of the adjacent coding unit is an intra-frame coding mode.

In an embodiment, after obtaining the quantization parameter of the current coding unit, the processor may perform the following step by executing the computer-readable instructions: determining the skip state of the intra-prediction mode corresponding to the current coding unit to be negative in response to a determination that the quantization parameter of the current coding unit is greater than the preset quantization parameter threshold.

In an embodiment, the processor may perform the following steps by executing the computer-readable instructions: obtaining a target inter-prediction residual of the current coding unit under the inter-prediction mode; calculating a target intra-prediction residual of the current coding unit under the intra-prediction mode in response to a determination that the skip state of the intra-prediction mode is negative; calculating an intra-frame coding cost of the current coding unit according to the target intra-prediction residual in response to a determination that the target intra-prediction residual is smaller than the target inter-prediction residual; calculating an inter-frame coding cost corresponding to the current coding unit according to the target inter-prediction residual in response to a determination that the intra-prediction residual is greater than the target inter-prediction residual; determining a target coding mode according to the intra-frame coding cost and the inter-frame coding cost; and encoding the current coding unit using the target coding mode.

In an embodiment, the processor may perform the following steps by executing the computer-readable instructions: applying coding dividing processing to the current coding unit to obtain coding subunits to form a corresponding coding subunit set; and using each coding subunit in the coding subunit set as the current coding unit to re-perform the step of obtaining the subunit set corresponding to the current coding unit.

It can be understood that the steps in the embodiments of this application are not necessarily performed in the sequence indicated by the step numbers. Unless clearly specified in this specification, there is no strict sequence limitation on the execution of the steps, and the steps may be performed in another sequence. Moreover, at least some of the steps in each embodiment may include a plurality of sub-steps or a plurality of stages. The sub-steps or stages are not necessarily performed at the same moment but may be performed at different moments. The sub-steps or stages are not necessarily performed sequentially, but may be performed in turn or alternately with another step or at least some of sub-steps or stages of the another step.

A person of ordinary skill in the art may understand that some or all procedures in the method in the foregoing embodiments may be implemented by a computer-readable instruction instructing related hardware. The readable instruction may be stored in a non-volatile computer-readable storage medium, and in response to a determination that the readable instruction is executed, the procedures in the foregoing method embodiments may be implemented. Any reference to a memory, a storage, a database, or another medium used in the embodiments provided in this application may include a non-volatile and/or volatile memory. The non-volatile memory may include a read-only memory (ROM), a programmable ROM (PROM), an electrically programmable ROM (EPROM), an electrically erasable programmable ROM (EEPROM), a flash memory, or the like. The volatile memory may include a random access memory (RAM) or an external cache. As an illustration instead of a limitation, the RAM is available in various forms, such as a static RAM (SRAM), a dynamic RAM (DRAM), a synchronous DRAM (SDRAM), a double data rate SDRAM (DDRSDRAM), an enhanced SDRAM (ESDRAM), a synchronization link (Synchlink) DRAM (SLDRAM), a rambus direct RAM (RDRAM), a direct rambus dynamic RAM (DRDRAM), and a rambus dynamic RAM (RDRAM).

The invention is set out in the appended claims.

**Claims**

1. A video encoding method, carried out by a computer device, comprising:

obtaining a subunit set (A, B, C, D) corresponding to a current coding unit, the subunit set comprising subunits obtained by applying a preset dividing processing to the current coding unit;
determining a skip state of an intra-prediction mode corresponding to the current coding unit according to degrees of difference between subunits in the subunit set, comprising:

calculating (S2042A) pixel residuals between the adjacent subunits to obtain corresponding pixel residual matrices to form a residual matrix set;
applying (S2042B) feature transformation to each pixel residual matrix in the residual matrix set to obtain corresponding transformation matrices to form a transformation matrix set; and
obtaining (S2042C) a sum of absolute values of matrix elements in each transformation matrix in the transformation matrix set to obtain corresponding statistical difference degrees to form the difference degree set,
obtaining (S2044) a total difference degree using the sum of degrees of difference (AB, AC, BD, CD) in the difference degree set between adjacent subunits of the subunit set (A, B, C, D);
obtaining (S2046) a maximum difference degree and a minimum difference degree from the difference degree set (AB, AC, BD, CD) in response to a determination that the total difference degree is lower than a preset difference degree threshold;
determining (S2048) a difference of the maximum difference degree and the minimum difference degree; and
determining (S2049) the skip state of the intra-prediction mode corresponding to the current coding unit to be negative in response to a determination that said difference is smaller than a preset threshold;
determining (S2053) the skip state of the intra-prediction mode corresponding to the current coding unit to be positive in response to a determination that said difference is larger than the preset threshold and the current coding unit is eligible for coding division, wherein the current coding unit is eligible for coding dividing if the current coding unit is not the smallest coding unit;

skipping execution of the intra-prediction mode for the current coding unit in response to a determination that the skip state of the intra-prediction mode is positive, and encoding the current coding unit using an inter-prediction mode.

2. The method according to claim 1, wherein the applying feature transformation to each pixel residual matrix in the residual matrix set to obtain corresponding transformation matrices to form a transformation matrix set is done using a Hadamard Transform.

3. The method according to claim 1, wherein determining a skip state of an intra-prediction mode corresponding to the current coding unit comprises: after obtaining the total difference degree using the degrees of difference between adjacent subunits, determining the skip state of the intra-prediction mode corresponding to the current coding unit to be positive in response to a determination that the total difference degree is greater than the preset difference degree threshold.

4. The method according to claim 1, wherein the difference of the maximum difference degree and the minimum difference degree is calculated as a ratio of the maximum difference degree to the minimum difference degree

5. The method according to claim 1, further comprising determining the skip state of the intra-prediction mode corresponding to the current coding unit to be negative in response to a determination said difference is larger than the preset threshold and the current coding unit is not eligible for coding division.

**6.** The method according to claim 1, further comprising: before obtaining the subunit set corresponding to the current coding unit,

obtaining a target inter-prediction residual of the current coding unit under the inter-prediction mode;

obtaining a coding mode of an adjacent coding unit of the current coding unit after detecting the target inter-prediction residual is greater than a preset residual threshold;

obtaining a quantization parameter of the current coding unit in response to a determination that the coding mode of the adjacent coding unit is an inter-frame coding mode; and

performing the operation of obtaining the subunit set corresponding to the current coding unit in response to a determination that the quantization parameter of the current coding unit is smaller than or equal to a preset quantization parameter threshold.

**7.** The method according to claim 6, wherein determining a skip state of an intra-prediction mode corresponding to the current coding unit comprises: after obtaining the coding mode of the adjacent coding unit of the current coding unit,

determining the skip state of the intra-prediction mode corresponding to the current coding unit to be negative in response to a determination that the coding mode of the adjacent coding unit is an intra-frame coding mode.

**8.** The method according to claim 6, wherein determining a skip state of an intra-prediction mode corresponding to the current coding unit comprises: after obtaining the quantization parameter of the current coding unit,

determining the skip state of the intra-prediction mode corresponding to the current coding unit to be negative in response to a determination that the quantization parameter of the current coding unit is greater than the preset quantization parameter threshold.

**9.** The method according to claim 1, further comprising:

obtaining a target inter-prediction residual of the current coding unit under the inter-prediction mode;

calculating a target intra-prediction residual of the current coding unit under the intra-prediction mode in response to a determination that the skip state of the intra-prediction mode is negative;

calculating an intra-frame coding cost of the current coding unit according to the target intra-prediction residual in response to a determination that the target intra-prediction residual is smaller than the target inter-prediction residual;

calculating an inter-frame coding cost corresponding to the current coding unit according to the target inter-prediction residual in response to a determination that the intra-prediction residual is greater than the target inter-prediction residual;

determining a target coding mode according to the intra-frame coding cost and the inter-frame coding cost; and

encoding the current coding unit using the target coding mode.

**10.** The method according to claim 1, further comprising:

applying a coding dividing processing to the current coding unit to obtain coding subunits to form a corresponding coding subunit set; and

re-performing the operation of obtaining the subunit set corresponding to the current coding unit using each coding subunit in the coding subunit set as the current coding unit.

**11.** A computer device, comprising a memory and a processor, the memory storing computer-readable instructions executable by the processor to carry out the method of any of claims 1-10.

**12.** A computer device (200), comprising:

a subunit obtaining module (202), to obtain a subunit set (A, B, C, D) corresponding to a current coding unit, the subunit set comprises subunits obtained by applying preset dividing processing to the current coding unit;

a skip state determining module (204), to determine a skip state of an intra-prediction mode corresponding to the current coding unit according to degrees of difference between subunits in the subunit set, comprising:

a subunit difference degree calculating unit (20242), to

- calculate (S2042A) pixel residuals between the adjacent subunits to obtain corresponding pixel residual matrices to form a residual matrix set;
- apply (S2042B) feature transformation to each pixel residual matrix in the residual matrix set to obtain corresponding transformation matrices to form a transformation matrix set; and
- obtain (S2042C) a sum of absolute values of matrix elements in each transformation matrix in the transformation matrix set to obtain corresponding statistical difference degrees to form the difference degree set;

a total difference degree calculating unit (2044), to obtain (S2044) a total difference degree using the sum of degrees of difference (AB, AC, BD, CD) in the difference degree set between adjacent subunits of the subunit set (A, B, C, D);
a difference degree extreme value obtaining unit (2046), to obtain (S2046) a maximum difference degree and a minimum difference degree from the difference degree set (AB, AC, BD, CD) in response to a determination that the total difference degree is smaller than a preset difference degree threshold;
a similarity determining unit (2048), to determine (S2048) a difference of the maximum difference degree and the minimum difference degree; and
a skip state determining unit (2049), to determine (S2049) the skip state of the intra-prediction mode corresponding to the current coding unit to be negative in response to a determination that said difference is smaller than a preset threshold and to determine (S2053) the skip state of the intra-prediction mode corresponding to the current coding unit to be positive in response to a determination that said difference is larger than the preset threshold and the current coding unit is eligible for coding division, wherein the current coding unit is eligible for coding dividing if the current coding unit is not the smallest coding unit; and

an encoding module (206), to skip execution of the intra-prediction mode for the current coding unit in response to a determination that the skip state of the intra-prediction mode is positive, and encode the current coding unit using an inter-prediction mode.

13. A non-transitory storage medium storing computer-readable instructions, the computer-readable instructions when executed, cause one or multiple processors to carry out the method of any of claims 1-10.

**Patentansprüche**

1. Ein Videokodierungsverfahren, durchgeführt von einem Computergerät, umfassend:

Erhalten eines Unterbaugruppensatzes (A, B, C, D), der einer aktuellen Codiereinheit entspricht, wobei der Unterbaugruppensatz Unterbaugruppen umfasst, die durch Anwenden einer voreingestellten Teilungsverarbeitung auf die aktuelle Codiereinheit erhalten wurden;
Bestimmen eines Überspringzustands eines Intra-Prognosemodus, der der aktuellen Codiereinheit entspricht, gemäß Unterschiedsgraden zwischen Unterbaugruppen im Unterbaugruppensatz, umfassend:

Berechnen (S2042A) von Pixelresiduen zwischen den angrenzenden Unterbaugruppen, um entsprechende Pixelresidualmatrizen zu erhalten und einen Restmatrixsatz zu bilden;
Anwenden (S2042B) einer Merkmalstransformation auf jede Pixelresidualmatrix im Restmatrixsatz, um entsprechende Transformationsmatrizen zu erhalten und einen Transformationsmatrixsatz zu bilden; und
Erhalten (S2042C) einer Summe der absoluten Werte von Matrixelementen in jeder Transformationsmatrix im Transformationsmatrixsatz, um entsprechende statistische Unterschiedsgrade zu erhalten und einen Unterschiedsgradsatz zu bilden,
Erhalten (S2044) eines Gesamtunterschiedsgrads unter Verwendung der Summe der Unterschiedsgrade (AB, AC, BD, CD) im Unterschiedsgradsatz zwischen angrenzenden Unterbaugruppen des Unterbaugruppensatzes (A, B, C, D);
Erhalten (S2046) eines maximalen Unterschiedsgrads und eines minimalen Unterschiedsgrads aus dem Unterschiedsgradsatz (AB, AC, BD, CD) als Reaktion auf eine Feststellung, dass der Gesamtunterschiedsgrad niedriger ist als eine voreingestellte Unterschiedsgradschwelle;
Bestimmen (S2048) eines Unterschieds zwischen dem maximalen Unterschiedsgrad und dem minimalen Unterschiedsgrad; und
Bestimmen (S2049) des Überspringzustands des Intra-Prognosemodus, der der aktuellen Codiereinheit entspricht, als negativ als Reaktion auf eine Feststellung, dass dieser Unterschied kleiner ist als eine voreingestellte Schwelle;
Bestimmen (S2053) des Überspringzustands des Intra-Prognosemodus, der der aktuellen Codiereinheit entspricht, als positiv als Reaktion auf eine Feststellung, dass dieser Unterschied größer ist als die voreingestellte Schwelle und die aktuelle Codiereinheit geeignet für Codierungsteilung ist, wobei die aktuelle Codiereinheit geeignet für Codierungsteilung ist, wenn die aktuelle Codiereinheit nicht die kleinste Codiereinheit ist;

Überspringen der Ausführung des Intra-Prognosemodus für die aktuelle Codiereinheit als Reaktion auf eine Feststellung, dass der Überspringzustand des Intra-Prognosemodus positiv ist, und Codieren der aktuellen Codiereinheit unter Verwendung eines Inter-Prognosemodus.

2. Das Verfahren nach Anspruch 1, wobei das Anwenden der Merkmalstransformation auf jede Pixelresidualmatrix im Restmatrixsatz, um entsprechende Transformationsmatrizen zu erhalten und einen Transformationsmatrixsatz zu bilden, unter Verwendung einer Hadamard-Transformation erfolgt.

3. Das Verfahren nach Anspruch 1, wobei das Bestimmen eines Überspringzustands eines Intra-Prognosemodus, der der aktuellen Codiereinheit entspricht, umfasst: nach dem Erhalten des Gesamtunterschiedsgrads unter Verwendung der Unterschiedsgrade zwischen angrenzenden Unterbaugruppen, Bestimmen des Überspringzustands des Intra-Prognosemodus, der der aktuellen Codiereinheit entspricht, als positiv als Reaktion auf eine Feststellung, dass der Gesamtunterschiedsgrad größer ist als die voreingestellte Unterschiedsgradschwelle.

4. Das Verfahren nach Anspruch 1, wobei der Unterschied zwischen dem maximalen Unterschiedsgrad und dem minimalen Unterschiedsgrad als Verhältnis des maximalen Unterschiedsgrads zum minimalen Unterschiedsgrad berechnet wird.

5. Das Verfahren nach Anspruch 1, ferner umfassend Bestimmen des Überspringzustands des Intra-Prognosemodus, der der aktuellen Codiereinheit entspricht, als negativ als Reaktion auf eine Feststellung, dass dieser Unterschied größer ist als die voreingestellte Schwelle und die aktuelle Codiereinheit nicht geeignet für Codierungsteilung ist.

6. Das Verfahren nach Anspruch 1, ferner umfassend: vor dem Erhalten des Unterbaugruppensatzes, der der aktuellen Codiereinheit entspricht,

Erhalten eines Ziel-Inter-Prognose-Residuals der aktuellen Codiereinheit unter dem Inter-Prognosemodus;

Erhalten eines Codierungsmodus einer angrenzenden Codiereinheit der aktuellen Codiereinheit nach dem Erkennen, dass das Ziel-Inter-Prognose-Residual größer ist als eine voreingestellte Residualschwelle;

Erhalten eines Quantisierungsparameters der aktuellen Codiereinheit als Reaktion auf eine Feststellung, dass der Codierungsmodus der angrenzenden Codiereinheit ein Inter-Frame-Codierungsmodus ist; und

Durchführen der Operation des Erhaltens des Unterbaugruppensatzes, der der aktuellen Codiereinheit entspricht, als Reaktion auf eine Feststellung, dass der Quantisierungsparameter der aktuellen Codiereinheit kleiner oder gleich einer voreingestellten Quantisierungsparameterschwelle ist.

7. Das Verfahren nach Anspruch 6, wobei das Bestimmen eines Überspringzustands eines Intra-Prognosemodus, der der aktuellen Codiereinheit entspricht, umfasst: nach dem Erhalten des Codierungsmodus der angrenzenden Codiereinheit der aktuellen Codiereinheit,

Bestimmen des Überspringzustands des Intra-Prognosemodus, der der aktuellen Codiereinheit entspricht, als negativ als Reaktion auf eine Feststellung, dass der Codierungsmodus der angrenzenden Codiereinheit ein Intra-Frame-Codierungsmodus ist.

8. Das Verfahren nach Anspruch 6, wobei das Bestimmen eines Überspringzustands eines Intra-Prognosemodus, der der aktuellen Codiereinheit entspricht, umfasst: nach dem Erhalten des Quantisierungsparameters der aktuellen Codiereinheit,

Bestimmen des Überspringzustands des Intra-Prognosemodus, der der aktuellen Codiereinheit entspricht, als negativ in Reaktion auf eine Feststellung, dass der Quantisierungsparameter der aktuellen Codiereinheit größer als die voreingestellte Quantisierungsparameterschwelle ist.

9. Das Verfahren nach Anspruch 1, ferner umfassend:

Erhalten eines Ziel-Inter-Prognose-Residuals der aktuellen Codiereinheit unter dem Inter-Prognosemodus;

Berechnen eines Ziel-Intra-Prognose-Residuals der aktuellen Codiereinheit unter dem Intra-Prognosemodus in Reaktion auf eine Feststellung, dass der Überspringzustand des Intra-Prognosemodus negativ ist;

Berechnen einer Intra-Frame-Codierungskosten der aktuellen Codiereinheit gemäß dem Ziel-Intra-Prognose-Residual in Reaktion auf eine Feststellung, dass das Ziel-Intra-Prognose-Residual kleiner als das Ziel-Inter-Prognose-Residual ist;

Berechnen einer Inter-Frame-Codierungskosten, die der aktuellen Codiereinheit entspricht, gemäß dem Ziel-Inter-Prognose-Residual in Reaktion auf eine Feststellung, dass das Intra-Prognose-Residual größer als das Ziel-Inter-Prognose-Residual ist;

Bestimmen eines Ziel-Codierungsmodus gemäß den Intra-Frame-Codierungskosten und den Inter-Frame-Codierungskosten; und Codieren der aktuellen Codiereinheit unter Verwendung des Ziel-Codierungsmodus.

10. Das Verfahren nach Anspruch 1, ferner umfassend:

Anwenden einer Codierungsteilungsverarbeitung auf die aktuelle Codiereinheit, um Codierungsunterbaugruppen zu erhalten, um einen entsprechenden Codierungsunterbaugruppensatz zu bilden; und
Wiederholen der Operation des Erhaltens des Unterbaugruppensatzes, der der aktuellen Codiereinheit entspricht, unter Verwendung jeder Codierungsunterbaugruppe im Codierungsunterbaugruppensatz als der aktuellen Codiereinheit.

11. Ein Computergerät, umfassend einen Speicher und einen Prozessor, wobei der Speicher computerlesbare Anweisungen speichert, die vom Prozessor ausführbar sind, um das Verfahren eines der Ansprüche 1-10 durchzuführen.

12. Ein Computergerät (200), umfassend:

ein Unterbaugruppen-Erfassungsmodul (202), um einen Unterbaugruppensatz (A, B, C, D) zu erhalten, der einer aktuellen Codiereinheit entspricht, wobei der Unterbaugruppensatz Unterbaugruppen umfasst, die durch Anwenden einer voreingestellten Teilungsverarbeitung auf die aktuelle Codiereinheit erhalten wurden;
ein Überspringzustandsbestimmungsmodul (204), um einen Überspringzustand eines Intra-Prognosemodus zu bestimmen, der der aktuellen Codiereinheit entspricht, gemäß Unterschiedsgraden zwischen Unterbaugruppen im Unterbaugruppensatz, umfassend:

eine Unterbaugruppen-Unterschiedsgrad-Berechnungseinheit (20242), um

- Pixelresiduen zwischen den angrenzenden Unterbaugruppen zu berechnen (S2042A), um entsprechende Pixelresidualmatrizen zu erhalten, um einen Restmatrixsatz zu bilden;
- eine Merkmalstransformation auf jede Pixelresidualmatrix im Restmatrixsatz anzuwenden (S2042B), um entsprechende Transformationsmatrizen zu erhalten, um einen Transformationsmatrixsatz zu bilden; und
- eine Summe der absoluten Werte von Matrixelementen in jeder Transformationsmatrix im Transformationsmatrixsatz zu erhalten (S2042C), um entsprechende statistische Unterschiedsgrade zu erhalten, um den Unterschiedsgradsatz zu bilden;

eine Gesamtunterschiedsgrad-Berechnungseinheit (2044), um einen Gesamtunterschiedsgrad zu erhalten (S2044) unter Verwendung der Summe der Unterschiedsgrade (AB, AC, BD, CD) im Unterschiedsgradsatz zwischen angrenzenden Unterbaugruppen des Unterbaugruppensatzes (A, B, C, D);
eine Unterschiedsgrad-Extremwert-Erfassungseinheit (2046), um einen maximalen Unterschiedsgrad und einen minimalen Unterschiedsgrad aus dem Unterschiedsgradsatz (AB, AC, BD, CD) zu erhalten (S2046) in Reaktion auf eine Feststellung, dass der Gesamtunterschiedsgrad kleiner als eine voreingestellte Unterschiedsgradschwelle ist;
eine Ähnlichkeitsbestimmungseinheit (2048), um einen Unterschied des maximalen Unterschiedsgrads und des minimalen Unterschiedsgrads zu bestimmen (S2048); und
eine Überspringzustandsbestimmungseinheit (2049), um den Überspringzustand des Intra-Prognosemodus, der der aktuellen Codiereinheit entspricht, als negativ zu bestimmen (S2049) in Reaktion auf eine Feststellung, dass dieser Unterschied kleiner als eine voreingestellte Schwelle ist und um den Überspringzustand des Intra-Prognosemodus, der der aktuellen Codiereinheit entspricht, als positiv zu bestimmen (S2053) in Reaktion auf eine Feststellung, dass dieser Unterschied größer als die voreingestellte Schwelle ist und die aktuelle Codiereinheit geeignet für Codierungsteilung ist, wobei die aktuelle Codiereinheit geeignet für Codierungsteilung ist, wenn die aktuelle Codiereinheit nicht die kleinste Codiereinheit ist; und
ein Codierungsmodul (206), um die Ausführung des Intra-Prognosemodus für die aktuelle Codiereinheit zu überspringen in Reaktion auf eine Feststellung, dass der Überspringzustand des Intra-Prognosemodus positiv ist, und die aktuelle Codiereinheit unter Verwendung eines Inter-Prognosemodus zu codieren.

13. Ein nicht-flüchtiges Speichermedium, das computerlesbare Anweisungen speichert, wobei die computerlesbaren Anweisungen bei Ausführung dazu führen, dass ein oder mehrere Prozessoren das Verfahren eines der Ansprüche 1-10 durchführen.

## Revendications

1. Une méthode de codage vidéo, réalisée par un dispositif informatique, comprenant :

   l'obtention d'un ensemble de sous-unités (A, B, C, D) correspondant à une unité de codage actuelle, l'ensemble de sous-unités comprenant des sous-unités obtenues en appliquant un traitement de division prédéfini à l'unité de codage actuelle ;
   la détermination d'un état de saut d'un mode d'intra-prédiction correspondant à l'unité de codage actuelle selon les degrés de différence entre les sous-unités dans l'ensemble de sous-unités, comprenant :

      le calcul (S2042A) des résidus de pixels entre les sous-unités adjacentes pour obtenir les matrices résiduelles de pixels correspondantes pour former un ensemble de matrices résiduelles ;
      l'application (S2042B) de la transformation de caractéristiques à chaque matrice résiduelle de pixels dans l'ensemble de matrices résiduelles pour obtenir les matrices de transformation correspondantes pour former un ensemble de matrices de transformation ; et
      l'obtention (S2042C) d'une somme des valeurs absolues des éléments de matrice dans chaque matrice de transformation dans l'ensemble de matrices de transformation pour obtenir les degrés de différence statistiques correspondants pour former l'ensemble de degrés de différence,
      l'obtention (S2044) d'un degré de différence total en utilisant la somme des degrés de différence (AB, AC, BD, CD) dans l'ensemble de degrés de différence entre les sous-unités adjacentes de l'ensemble de sous-unités (A, B, C, D) ;
      l'obtention (S2046) d'un degré de différence maximum et d'un degré de différence minimum à partir de l'ensemble de degrés de différence (AB, AC, BD, CD) en réponse à une détermination que le degré de différence total est inférieur à un seuil de degré de différence prédéfini ;
      la détermination (S2048) d'une différence du degré de différence maximum et du degré de différence minimum ; et
      la détermination (S2049) de l'état de saut du mode d'intra-prédiction correspondant à l'unité de codage actuelle pour être négatif en réponse à une détermination que ladite différence est plus petite qu'un seuil prédéfini ;
la détermination (S2053) de l'état de saut du mode d'intra-prédiction correspondant à l'unité de codage actuelle pour être positif en réponse à une détermination que ladite différence est plus grande que le seuil prédéfini et que l'unité de codage actuelle est éligible pour la division de codage,
dans lequel l'unité de codage actuelle est éligible pour la division de codage si l'unité de codage actuelle n'est pas la plus petite unité de codage ;
l'omission de l'exécution du mode d'intra-prédiction pour l'unité de codage actuelle en réponse à une détermination que l'état de saut du mode d'intra-prédiction est positif, et le codage de l'unité de codage actuelle en utilisant un mode d'inter-prédiction.

2. La méthode selon la revendication 1, dans laquelle l'application de la transformation de caractéristiques à chaque matrice résiduelle de pixels dans l'ensemble de matrices résiduelles pour obtenir les matrices de transformation correspondantes pour former un ensemble de matrices de transformation est effectuée en utilisant une Transformée de Hadamard.

3. La méthode selon la revendication 1, dans laquelle la détermination d'un état de saut d'un mode d'intra-prédiction correspondant à l'unité de codage actuelle comprend : après l'obtention du degré de différence total en utilisant les degrés de différence entre les sous-unités adjacentes,
la détermination de l'état de saut du mode d'intra-prédiction correspondant à l'unité de codage actuelle pour être positif en réponse à une détermination que le degré de différence total est supérieur au seuil de degré de différence prédéfini.

4. La méthode selon la revendication 1, dans laquelle la différence du degré de différence maximum et du degré de différence minimum est calculée comme un ratio du degré de différence maximum au degré de différence minimum

5. La méthode selon la revendication 1, comprenant en outre
la détermination de l'état de saut du mode d'intra-prédiction correspondant à l'unité de codage actuelle pour être négatif en réponse à une détermination que ladite différence est plus grande que le seuil prédéfini et que l'unité de codage actuelle n'est pas éligible pour la division de codage.

6. La méthode selon la revendication 1, comprenant en outre : avant l'obtention de l'ensemble de sous-unités correspondant à l'unité de codage actuelle,

l'obtention d'un résidu d'inter-prédiction cible de l'unité de codage actuelle sous le mode d'inter-prédiction ;

l'obtention d'un mode de codage d'une unité de codage adjacente de l'unité de codage actuelle après avoir détecté que le résidu d'inter-prédiction cible est supérieur à un seuil résiduel prédéfini ; l'obtention d'un paramètre de quantification de l'unité de codage actuelle en réponse à une détermination que le mode de codage de l'unité de codage adjacente est un mode de codage inter-trame ; et

l'exécution de l'opération d'obtention de l'ensemble de sous-unités correspondant à l'unité de codage actuelle en réponse à une détermination que le paramètre de quantification de l'unité de codage actuelle est inférieur ou égal à un seuil de paramètre de quantification prédéfini.

7. La méthode selon la revendication 6, dans laquelle la détermination d'un état de saut d'un mode d'intra-prédiction correspondant à l'unité de codage actuelle comprend : après l'obtention du mode de codage de l'unité de codage adjacente de l'unité de codage actuelle,
la détermination de l'état de saut du mode d'intra-prédiction correspondant à l'unité de codage actuelle pour être négatif en réponse à une détermination que le mode de codage de l'unité de codage adjacente est un mode de codage intra-trame.

8. La méthode selon la revendication 6, dans lequel la détermination d'un état de saut d'un mode d'intra-prédiction correspondant à l'unité de codage actuelle comprend : après avoir obtenu le paramètre de quantification de l'unité de codage actuelle, déterminer que l'état de saut du mode d'intra-prédiction correspondant à l'unité de codage actuelle est négatif en réponse à une détermination que le paramètre de quantification de l'unité de codage actuelle est supérieur au seuil de paramètre de quantification prédéfini.

9. La méthode selon la revendication 1, comprenant en outre :

l'obtention d'un résidu d'inter-prédiction cible de l'unité de codage actuelle sous le mode d'inter-prédiction ;

le calcul d'un résidu d'intra-prédiction cible de l'unité de codage actuelle sous le mode d'intra-prédiction en réponse à une détermination que l'état de saut du mode d'intra-prédiction est négatif

le calcul d'un coût de codage intra-trame de l'unité de codage actuelle selon le résidu d'intra-prédiction cible en réponse à une détermination que le résidu d'intra-prédiction cible est plus petit que le résidu d'inter-prédiction cible ;

le calcul d'un coût de codage inter-trame correspondant à l'unité de codage actuelle selon le résidu d'inter-prédiction cible en réponse à une détermination que le résidu d'intra-prédiction est supérieur au résidu d'inter-prédiction cible ;

la détermination d'un mode de codage cible selon le coût de codage intra-trame et le coût de codage inter-trame ; et

le codage de l'unité de codage actuelle en utilisant le mode de codage cible.

10. La méthode selon la revendication 1, comprenant en outre :

l'application d'un traitement de division de codage à l'unité de codage actuelle pour obtenir des sous-unités de codage pour former un ensemble de sous-unités de codage correspondant ; et

la ré-exécution de l'opération d'obtention de l'ensemble de sous-unités correspondant à l'unité de codage actuelle en utilisant chaque sous-unité de codage dans l'ensemble de sous-unités de codage comme l'unité de codage actuelle.

11. Un dispositif informatique, comprenant une mémoire et un processeur, la mémoire stockant des instructions lisibles par ordinateur exécutables par le processeur pour réaliser la méthode de l'une quelconque des revendications 1 à 10.

12. Un dispositif informatique (200), comprenant :

un module d'obtention de sous-unités (202), pour obtenir un ensemble de sous-unités (A, B, C, D) correspondant à une unité de codage actuelle, l'ensemble de sous-unités comprend des sous-unités obtenues en appliquant un traitement de division prédéfini à l'unité de codage actuelle ;

un module de détermination de l'état de saut (204), pour déterminer un état de saut d'un mode d'intra-prédiction correspondant à l'unité de codage actuelle selon les degrés de différence entre les sous-unités dans l'ensemble de sous-unités, comprenant :

une unité de calcul de degré de différence de sous-unité (20242), pour

- calculer (S2042A) les résidus de pixels entre les sous-unités adjacentes pour obtenir des matrices de résidus de pixels correspondantes pour former un ensemble de matrices résiduelles ;

- appliquer (S2042B) une transformation de caractéristiques à chaque matrice de résidus de pixels dans l'ensemble de matrices résiduelles pour obtenir des matrices de transformation correspondantes pour former un ensemble de matrices de transformation ; et

- obtenir (S2042C) une somme des valeurs absolues des éléments de matrice dans chaque matrice de transformation dans l'ensemble de matrices de transformation pour obtenir des degrés de différence statistiques correspondants pour former l'ensemble de degrés de différence ;

une unité de calcul de degré de différence total (2044), pour obtenir (S2044) un degré de différence total en utilisant la somme des degrés de différence (AB, AC, BD, CD) dans l'ensemble de degrés de différence entre les sous-unités adjacentes de l'ensemble de sous-unités (A, B, C, D) ;

une unité d'obtention de valeur extrême de degré de différence (2046), pour obtenir (S2046) un degré de différence maximum et un degré de différence minimum à partir de l'ensemble de degrés de différence (AB, AC, BD, CD) en réponse à une détermination que le degré de différence total est plus petit qu'un seuil de degré de différence prédéfini ;

une unité de détermination de similarité (2048), pour déterminer (S2048) une différence du degré de différence maximum et du degré de différence minimum ; et

une unité de détermination de l'état de saut (2049), pour déterminer (S2049) que l'état de saut du mode d'intra-prédiction correspondant à l'unité de codage actuelle est négatif en réponse à une détermination que ladite différence est plus petite qu'un seuil prédéfini et pour déterminer (S2053) que l'état de saut du mode d'intra-prédiction correspondant à l'unité de codage actuelle est positif en réponse à une détermination que ladite différence est plus grande que le seuil prédéfini et que l'unité de codage actuelle est éligible pour la division de codage, l'unité de codage actuelle étant éligible pour la division de codage si l'unité de codage actuelle n'est pas la plus petite unité de codage ; et

un module de codage (206), pour sauter l'exécution du mode d'intra-prédiction pour l'unité de codage actuelle en réponse à une détermination que l'état de saut du mode d'intra-prédiction est positif, et coder l'unité de codage actuelle en utilisant un mode d'inter-prédiction.

13. Un support de stockage non transitoire stockant des instructions lisibles par ordinateur, les instructions lisibles par ordinateur lorsqu'elles sont exécutées, amènent un ou plusieurs processeurs à réaliser la méthode de l'une quelconque des revendications 1 à 10.

110

120

Network
connection

FIG. 1

Input
coding unit → Transformation
and quantization → Entropy
encoding

Reference
frame → Motion
estimation    Predicted value

Mode
selection

Intra-frame
prediction

Reconstructed
frame ← Deblocking
filter ← Inverse quantization and
inverse transformation

FIG. 2

obtaining a subunit set corresponding to the current coding unit ,
the subunit set includes subunits obtained from a preset dividing
processing of the current coding unit

S202

determining a skip state of an intra -prediction mode corresponding
to the current coding unit according to degrees of difference
between subunits in the subunit set

S204

skipping execution of the intra -prediction mode for the current
coding unit when the skip state of the intra -prediction mode is
positive, and encoding the current coding unit using an inter -
prediction mode

S206

FIG. 3

| A | B |
|---|---|
| C | D |

FIG. 4

calculating degrees of difference between adjacent subunits to form a difference degree set — S2042

obtaining a total difference degree using the degrees of difference between adjacent subunits — S2044

obtaining the maximum degree of difference and the minimum degree of difference from the difference degree set when the total difference degree is smaller than a preset difference degree threshold — S2046

determining a subunit similarity degree corresponding to the current coding unit according to the maximum difference degree and the minimum difference degree — S2048

determining the skip state of the intra-prediction mode corresponding to the current coding unit according to the subunit similarity degree — S2049

FIG. 5

calculating pixel residuals between adjacent subunits to obtain corresponding pixel residual matrices to form a residual matrix set

S2042A

applying feature transformation to each pixel residual matrix in the residual matrix set to obtain corresponding transformation matrices to form a transformation matrix set

S2042B

obtaining the sum of absolute values of matrix elements of each transformation matrix in the transformation matrix set to obtain corresponding statistical difference degrees to form the difference degree set

S2042C

FIG. 6

obtaining a target inter-prediction residual of the current coding unit under an inter-prediction mode

S208

obtaining a coding mode of an adjacent coding unit of the current coding unit after detecting the target inter-prediction residual is greater than a preset residual threshold

S210

obtaining a quantization parameter of the current coding unit when the coding mode of the adjacent coding unit is an inter-prediction coding mode

S212

performing the step of obtaining a subunit set corresponding to the current coding unit when the quantization parameter of the current coding unit is smaller than or equal to a preset quantization parameter threshold

S214

FIG. 7

S402

obtaining a target inter-prediction residual of the current coding unit under an inter-prediction mode

S404

calculating a target intra-prediction residual of the current coding unit under an intra-prediction mode when the skip state of the intra-prediction mode is negative

S406

calculating an intra-prediction coding cost of the current coding unit according to the target intra-prediction residual when the target intra-prediction residual is smaller than the target inter-prediction residual

S408

calculating an inter-prediction coding cost corresponding to the current coding unit according to the target inter-prediction residual when the target intra-prediction residual is greater than the target inter-prediction residual

S410

determining a target coding mode according to the intra-prediction coding cost and the inter-prediction coding cost

S412

encoding the current coding unit using the target coding mode

FIG. 8

S220

| applying a coding dividing processing to the current coding unit to obtain coding subunits to form a corresponding coding subunit set |
| --- |

S222

| re-performing the step of obtaining a subunit set corresponding to the current coding unit using each coding subunit in the coding subunit set as the current coding unit |
| --- |

FIG. 9

FIG. 10

S601

obtaining a target inter-prediction residual of the current coding unit under an inter-prediction mode

S602

determining whether the target inter-prediction residual is greater than a preset residual threshold

Yes

S603

determining whether an adjacent coding unit includes an intra-prediction coding mode

No

Yes

Yes

S604

determining whether a quantization parameter is greater than a threshold

No

No

S605

calculating difference degrees of four subunits

S606

determining whether to select intra-prediction according to the difference degrees of the subunits

Yes

No

S607

selecting an intra-prediction mode and calculating an intra-prediction residual

S608

Whether the intra-prediction residual is smaller than the target inter-prediction target residual

No

Yes

S610

calculating an inter-prediction coding cost of the current coding unit under the inter-prediction mode

S609

calculating an intra-prediction coding cost of the current coding unit under the intra-prediction mode

S611

determining a target coding mode according to the intra-prediction coding cost and the inter-prediction coding cost

S612

encoding the current coding unit using the target coding mode

FIG. 11

S6061

determining
whether a total difference
degree is greater than a preset
difference degree
threshold

No

Yes

S6062

calculating a ratio of a maximum
difference degree to a minimum
difference degree

S6063

determining
whether the ratio is
greater than a
threshold

No

Yes

S6064

Whether
coding division can be
performed on a current
coding unit

No

Yes

S6065

It is necessary to select an intra-
prediction mode for the
current coding unit

S6066

It is unnecessary to select an
intra- prediction mode for
the current coding unit

FIG. 12

200

202

Subunit obtaining
module

204

Skip state determining
module

206

Encoding module

FIG. 13

_204

2042
Subunit difference
degree calculating unit

2044
Total difference
degree calculating unit

2046
Difference degree extreme
value obtaining unit

2048
Similarity determining unit

2049
Skip- state
determining unit

# FIG. 14

2042

2042A
Residual matrix set
calculating subunit

2042B
Transformation subunit

2042C
Matrix
summation subunit

# FIG. 15

200

208

Inter- prediction
residual obtaining module

210

Adjacent coding mode
obtaining unit

212

Quantization parameter
obtaining unit

214

Processing module

FIG. 16

200

402

Inter- prediction
residual obtaining module

404

Intra-prediction residual
calculating unit

406

Intra-prediction coding cost
calculating unit

408

Inter-prediction coding cost
calculating unit

410

Target coding mode
determining unit

412

Encoding unit

FIG. 17

FIG. 18

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810102997X
- WO 2014161302 A1
- CN 104104947 A